(19) Europäisches Patentamt
European Patent Office
Office européen des brevets

(11) Numéro de publication: **0 026 146**
**A1**

(12) **DEMANDE DE BREVET EUROPEEN**

(21) Numéro de dépôt: 80401349.8

(22) Date de dépôt: 19.09.80

(51) Int. Cl.³: **H 04 M 1/23**

(30) Priorité: 19.09.79 FR 7923368

(43) Date de publication de la demande: 01.04.81 Bulletin 81/13

(84) Etats Contractants Désignés: BE DE GB IT NL

(71) Demandeur: Société des Téléphones PICART LEBAS
115, boulevard de la Villette
F-75010 Paris(FR)

(72) Inventeur: Richard, Pierre
Nermont La Chapelle du Noyer
F-28200 Chateaudun(FR)

(74) Mandataire: Martinet, René et al,
Cabinet Martinet 62, rue des Mathurins
F-75008 Paris(FR)

(54) **Clavier de commutation et utilisation de celui-ci pour un poste téléphonique.**

(57) Le clavier de commutation est destiné notamment à un appareil téléphonique d'intercommunication qui comporte, pour chaque touche réseau (1) ou privé (2), une pièce tournante intermédiaire (426) entraînés par le côté (16) de la touche (1) et commandant des connexions et déconnexions de paires de lames de contact flexibles (424) réparties temporellement pendant la course de la touche. Pour une touche réseau (1), lapièce tournante est un volet (426) coopérant avec l'une des lames de chaque paire (424) et pivotable par glissement ou roulement d'un appendice (4263) sur un profilé (161, 162) de la touche. Pour une touche privé, la pièce tournante est un arbre comportant des cames entretoisées par les extrémités des lames et une roue dentée coopérant avec une crémaillère solidaire d'une face de la touche. Les pièces tournantes et les lames associées à une touche réseau et à deux touches privé forment un ensemble interchangeable (40, 41, 42). Ces pièces tournantes et lames de contact peuvent être utilisées dans un clavier de commutation autre que téléphonique.

./...

EP 0 026 146 A1

FIG.8
427
4265
4266
1
4266
4265
4264v
16r
161v
161r
10
16v
162r
162v
4264r
4265
(arrière)
426r
4262r
4263r
12
400
404
4261
4260
424r
4260
410
421
42
40
425
424v
4262v
420
41
4263v
426v
422
423
420m
4260
(avant)
4261
4260

# CLAVIER DE COMMUTATION ET UTILISATION DE CELUI-CI POUR UN POSTE TELEPHONIQUE

La principale invention concerne un clavier de commutation dans lequel chaque touche est rappelée par ressort et présente au moins une face latérale profilée qui coopère avec une paire de lames de contact flexibles à débattement perpendiculaire à la face profilée, par l'intermédiaire d'une pièce qui est montée tournante perpendiculaire aux directions de déplacement de la touche et de débattement des lames dont une première partie est toujours en contact avec la face profilée par roulement ou glissement sur celle-ci.

Un tel clavier de commutation est décrit dans le brevet français 2.117.111. La pièce intermédiaire tournante entre la face latérale profilée d'une touche et une extrémité libre d'une lame de contact flexible est constituée par une bille qui est logée dans un orifice pratiqué dans le corps fixe de guidage à coulissement de la touche. La face profilée de la touche présente un creux qui translate la bille suivant une direction perpendiculaire au déplacement de la touche et du débattement d'une lame, lors de l'enfoncement de la touche. L'extrémité de la lame de contact est alors poussée par la bille contre l'extrémité libre de l'autre lame de la paire afin d'établir le contact électrique entre celle-ci en fin de course descendante de la touche.

Une telle structure des moyens mécaniques de commande de la connexion d'une paire de lames de contact ne peut pas être mise en œuvre pour la commande de connexions de plusieurs paires de lames de contact. En effet, la bille ne possède qu'un seul point d'application susceptible de coopérer avec une lame de contact. Or, il est connu que cette exigence de commande d'un grand nombre de paires de lames de contact par une touche est requise dans certains claviers de commutation destinés à des postes téléphoniques ou télé-informatiques. En outre, la descente d'une touche doit commander non seulement la connexion de lames de contact mais également leur déconnexion afin de fermer brièvement un contact au cours de la descente. Conjointement à ceci, les lames de certaines paires doivent être connectées, resp. déconnectées, simultanément ou successivement afin de commander à des instants prédéterminés différents ces connexions au cours de la descente de la touche.

D'autres claviers de commutation à touche sont connus dans l'art antérieur et ne permettent pas de résoudre ces problèmes. On peut citer à ce sujet par exemple la demande de brevet allemand DT-AS 1.008.360, le brevet américain 3.518.383 et le brevet français 1.533.968.

Selon la demande de brevet allemand précitée, la pièce tournante est un rouleau qui est monté à l'extrêmité d'une lame ressort flexible coopérant avec un unique contact. Le rouleau roule sur des saillies différentes de la face profilée de la touche, à profil vertical en marches d'escalier.

Le clavier de commutation décrit dans le brevet américain 3.518.383 n'associe pas individuellement chaque touche à une paire de lames de contact. Une unique paire de lames de contact est prévue, lesquelles lames sont déconnectées au repos et sont connectées après les enfoncements successifs de touches prédéterminées. Une pièce intermédiaire est mue en translation parallèlement au déplacement des touches et est, au repos, touches non enfoncées, dans le prolongement des extrêmités des deux lames de contact à séparer. La translation de cette pièce est obtenue au moyen d'une crémaillère qui est solidaire de cette pièce et coopère avec un arbre à plusieurs roues dentées respectivement associées aux touches prédéterminées. Les extrêmités de chacune des touches prédéterminées jouent le rôle de poussoir pour poussoir à rotation une dent de la roue dentée associée, en fin de course de la touche correspondante. La rotation pas-à-pas de l'arbre à roues dentées par les enfoncements successifs des touches provoque la translation pas-à-pas de la pièce intermédiaire qui sépare les extrêmités des deux lames lors de l'enfoncement de la dernière touche prédéterminée.

Ainsi, les pièces intermédiaires respectivement montées à flexion et à translation selon la demande de brevet allemand 1.008.360 et le brevet américain 3.518.383 ne sont pas prévues pour les connexions et/ou déconnexions de plusieurs lames de contact. En outre, on notera que les mécanismes selon le brevet américain 3.518.383 sont relativement encombrants pour obtenir un clavier de commutation de faible volume.

La commande mécanique des paires de lames de contact coopérant avec un profilé vertical d'une touche de clavier selon le brevet français 1.533.968, au nom de l'actuelle demanderesse, repose sur un principe de fonctionnement analogue à celui de la demande de brevet allemand 1.008.360. Selon ce brevet français, deux paires de lames de contact sont par exemple juxtaposées verticalement et ont leurs extrémités disposées horizontalement au droit de la face profilée. Cette dernière comporte un bossage qui pousse directement les extrémités des lames longues des paires,sans l'intermédiaire d'une pièce tournante, successivement lors de la descente de la touche. Cette juxtaposition des paires de lames de contact permettrait de commander de nombreuses paires de lames au détriment d'une très longue course des touches. Or une telle course confère une hauteur du clavier très conséquente et ne répond pas aux exigences des claviers destinés au grand public.

La présente invention a donc pour but de fournir un clavier de commutation contenant pour chaque touche une pièce intermédiaire entre la face profilée de la touche et les lames de contact dont la configuration contribue à sélectionner temporellement, c'est-à-dire successivement et/ou simultanément, non seulement les connexions de lames de certaines paires mais également les déconnexions d'autres paires de lames ainsi que les connexions et déconnexions successives, ou inversement, relativement encore à des lames d'autres paires. Complémentairement, la configuration de cette pièce intermédiaire ne contribue pas à augmenter la course de la touche qui reste du même ordre de grandeur que celles des touches de claviers connus.

A cette fin, un clavier de commutation du genre défini dans l'entrée en matière est caractérisé en ce que plusieurs lames de contact flexibles coopèrent avec la face latérale profilée de chaque touche par l'intermédiaire de ladite pièce tournante et sont juxtaposées longitudinalement le long de l'axe de rotation de la pièce tournante associée et en ce que la pièce tournante tourne autour d'un axe de rotation fixe et comporte plusieurs secondes parties contre chacune desquelles est appliquée au moins l'une des lames d'une paire et dont au moins deux ont des sections transversales à l'axe de rotation fixe différentes afin que les lames des deux paires associées à ces deux secondes parties à sections transversales différentes soient respectivement connectées et/ou déconnectées simultanément ou successivement.

L'invention prévoit essentiellement deux types de pièce intermédiaire dont l'un est fondé sur le principe des arbres à cames et dont l'autre est fondé sur un fonctionnement à basculement.

Selon le premier type, la première partie de la pièce tournante d'au moins une touche est appliquée par un ressort contre la face latérale profilée de la touche qui est interne ou externe au corps de la touche et qui présente au moins une transition pour la rotation de la pièce tournante et en ce que l'une des lames d'une paire associée à la touche est, par sa propre flexion, appliquée contre une seconde partie correspondante de la pièce tournante et déconnectée de l'autre lame, ou appliquée contre une plaque fixe et connectée à l'autre lame, lorsque la touche est au repos, et appliquée contre la plaque fixe et connectée à l'autre lame ou appliquée contre une seconde partie correspondante de la pièce tournante et déconnectée de l'autre lame, lorsque la pièce intermédiaire tournante a tourné par passage de la première partie sur la transition, tandis que l'autre lame est appliquée contre la plaque fixe. La pièce tournante est alors analogue à un volet à section en équerre dont l'un des chants est monté à rotation et dont l'autre présente, comme secondes parties, des orifices et/ou des entailles qui constituent les points d'application des lames coopérant avec le volet. Les distances des points d'application des lames par rapport à un plan fixe passant par l'axe de rotation du volet peuvent être différentes, ce qui contribue à la répartition temporelle des connexions et/ou déconnexions des paires de lames lors du pivotement du volet par passage de sa première partie sur la transition du profilé de la touche.

Une utilisation particulière de ce premier type de pièce intermédiaire selon l'invention concerne une touche réseau d'un poste téléphonique. On sait qu'une touche réseau peut être calée à deux positions dites de garde et de prise de ligne. Dans ce cas, au moins deux profilés à transition sont prévus pour être associés à deux volets respectivement, de sorte qu'un groupe de paires de lame de contact sont connectées et/ou déconnectées lors de la garde de la ligne et qu'un autre groupe de paires de lames de contact sont connectées et/ou déconnectées lors de la prise de la ligne et verrouillage de la touche par le crochet correspondant du râtelier réseau. De préférence, chaque lame d'une paire se présente alors sous la forme d'une équerre ayant un premier côté qui tend, par sa flexion propre, à s'appliquer vers la plaque fixe, un second côté épousant la forme de la base en T de la plaque, et une pliure appliquée contre un coin T de la plaque par un élément cylindrique amovible.

Selon le second type, la pièce intermédiaire tournante d'au moins une touche est constituée par un arbre tournant perpendiculairement à

la direction de déplacement de la touche et de débattement des lames ayant une ou plusieurs cames, en tant que secondes parties, et une roue dentée, en tant que première partie, coopérant avec une crémaillère formant la face profilée de la touche. Les lames d'une paire associée à la touche sont, par leurs propres flexions, appliquées de part et d'autre et contre une came. Les sections des cames peuvent être différentes et orientées suivant des axes différents de sorte que certaines paires de lames peuvent subir une connexion et une déconnexion ou une pluralité de connexions et de déconnexions pendant la course d'enfoncement de la touche. Selon une réalisation préférée, chaque lame d'une paire présente une pliure sensiblement supérieure à 90°, intérieurement contre un premier point d'application et, de part et d'autre de cette pliure, un premier bras qui a un coude appliqué contre la came par un second point d'application, une saillie intermédiaire entre la pliure et le coude appliqué sur le second point d'application à l'opposé du premier point d'application et une extrémité prolongeant le coude pour coopérer avec celle de l'autre lame de ladite paire, et un second bras terminé en crochet entourant un troisième point d'application et appliqué contre une plaque à circuit imprimé. Ce second type de pièce intermédiaire est de préférence associé à une touche privé dans le cas de l'utilisation particulière du clavier selon l'invention pour un poste téléphonique d'intercommunication.

En outre, on notera que, selon d'autres variantes, deux ou plusieurs faces profilées de chaque touche peuvent être du genre à crémaillères coopérant avec des lames de contact par l'intermédiaire d'arbres à cames et roues dentées.

Comme déjà dit, le clavier de commutation selon l'invention est particulièrement utilisé pour un poste téléphonique d'intercommunication notamment du genre décrit dans le brevet français précité 1.533.968 au nom de l'actuelle demanderesse. Un tel poste téléphonique d'intercommunication comprend une pluralité de touches réseau associées chacune à un bouton de garde dont l'enfoncement permet le pivotement d'un cliquet de garde rappelé par un ressort lorsqu'une butée dudit cliquet retient un téton de la touche réseau afin de maintenir, à l'encontre d'un ressort de rappel à la position de repos, la touche réseau en position de garde, des premiers moyens mécaniques du genre râtelier dit réseau muni de crochets pour retenir chacun, en position de verrouillage, le téton d'une touche réseau enfoncée, après translation du râtelier réseau par décrochage du combiné du poste et muni également de lumières qui retiennent l'extrémité inférieure des cliquets de garde lorsque le combiné est raccroché afin que les butées des cliquets soient dégagées de la course des tétons des touches réseau, des paires de lames de contact flexibles commandées par les touches réseau, une pluralité de touches privé, chacune rappelée par un ressort et munie d'un téton, des seconds moyens mécaniques du genre râtelier dit privé solidaire en translation du râtelier réseau, lesdits râteliers étant rappelés par un ressort dont la contrainte s'additionne à celle du ressort de rappel de la pédale du combiné, ledit râtelier privé étant muni de crochets pour retenir chacun, en position de verrouillage, le téton d'une touche privé enfoncée, après translation des râteliers par décrochage du combiné, et des paires de lames de contact flexibles commandées par les touches privé. Selon l'invention, l'utilisation du clavier pour un tel poste téléphonique d'intercommunication est caractérisée en ce que chaque touche réseau présente au moins une face latérale profilée qui coopère avec plusieurs paires de lames de contact par l'intermédiaire d'au moins une pièce tournante conformément au premier type à volet tournant défini ci-dessus et en ce que chaque touche privé présente au moins une face latérale profilée qui coopère avec plusieurs lames de contact par l'intermédiaire d'au moins une pièce tournante conformément au second type à arbre à cames et roue dentée défini ci-dessus.

Dans ce cas, les blocs de guidage d'une touche réseau et d'une ou de deux touches privé sont disposés de part et d'autre de la plaque supportant les lames de contact et la ou les pièces tournantes associées à la touche réseau. Ces blocs et cette plaque verticale intermédiaire forment un monobloc interchangeable de préférence parallépipédique, en matière plastique, directement issu de moulage. Ce monobloc est fixé sur la plaque à circuit imprimé contenue dans le boîtier du poste téléphonique. Toutes les pièces tournantes intermédiaires des genres à volet et à arbre à cames et roue dentée ainsi que les lames de contact peuvent être assemblés par des automates, en un ensemble interchangeable, ce qui confère un coût relativement réduit du poste téléphonique.

Les râtelier réseau et privé sont avantageusement deux organes séparables afin d'adapter le nombre de touches réseau et privé au nombre de lignes réseau et privé desservant l'abonné, sans pour cela modifier la structure interne du poste. A cet égard, chaque râtelier est suspendu entre les branches de deux chapes avant et arrière. Les chapes avant ou arrière sont solidaires d'un arbre monté tournant et les deux autres chapes et la pédale du combiné sont montées en partie tournante sur un axe tournant. De préférence, la paire de chapes arrière est montée tournant autour d'un tourillon commun auquel sont suspendus les râteliers. L'ensemble des axes, chapes et rateliers constitue ainsi deux parallélogrammes déformables solidaires dont le mouvement de va-et-vient en arrière et en avant est produit lors du raccrochage puis du décrochage ou lors du verrouillage d'une touche.

Avantageusement afin de limiter la course des râteliers lors du verrouillage d'une touche par un crochet, la pédale du combiné comporte une partie qui sert de butée d'inertie des râteliers, après décrochage, et qui est escamotable de la course des râteliers, lors du raccrochage.

Par ailleurs, le premier type de pièce tournante intermédiaire tel que défini ci-dessus peut être utilisé dans un poste téléphonique simple appel. Selon l'invention, un tel poste est caractérisé en ce que ses moyens de connexion à la ligne téléphonique comprennent des paires de lames de contact disposées sur une plaque fixe, telles que définies pour la coopération avec la pièce intermédiaire du premier type, qui coopèrent avec cette pièce intermédiaire pivotante, rappelée par ressort, permettant des connexions et des déconnexions des lames de contact, telles que définies ci-dessus, sous la commande de la pédale du combiné du poste. La pièce tournante tourne, lors du décrochage, par poussée de la pédale et, lors du raccrochage, par rappel de son ressort.

Selon une réalisation préférée de ce poste téléphonique simple appel, la pièce tournante est montée tournant autour d'un axe servant d'application de l'une des lames de chaque paire contre la plaque fixe et bute contre la plaque fixe après décrochage et/ou raccrochage. Les lames de contact, la pièce tournante et la plaque fixe forment un ensemble interchangeable.

La présente invention sera mieux comprise à la lecture de la description qui suit relative principalement à l'utilisation du clavier pour un poste téléphonique et à l'examen des dessins annexés correspondants, dans lesquels :

- la Fig. 1 est une vue en perspective schématique montrant l'implantation d'un bloc de commutation à une touche "réseau" et à deux touches "privé" dans un poste téléphonique d'intercommunication ;

- la Fig. 2 est une vue explosée du mécanisme de verrouillage "réseau" et "privé" du poste ;

- les Figs. 2A et 2B représentent le mécanisme de verrouillage en positions de verrouillage et de déverrouillage des touches ;

- la Fig. 3 est une vue explosée montrant la fixation d'un bloc de commutation sur la carte à circuit imprimé et le fond du poste ;

- la Fig. 4 est une vue explosée du mécanisme de verrouillage "réseau" relative à un bloc de commutation ;

- les Figs. 5A à 5D représentent schématiquement les phases de verrouillage et déverrouillage de deux touches "réseau" ;

- les Figs. 6A à 6C représentent schématiquement les phases de déverrouillage d'une touche "réseau" initialement en garde ;

- les Figs. 7A à 7C représentent schématiquement les phases de déverrouillage d'une touche "réseau" enfoncée à fond, suite au raccrochage du combiné du poste ;

- la Fig. 8 est une vue explosée des éléments de commutation commandés par une touche réseau ;

- la Fig. 9 est une vue en perspective montrant en détail une paire de lames conductrices flexibles à connexion et déconnexion commandées par une touche réseau ;

- la Fig. 10 est une vue explosée du mécanisme de verrouillage "privé" relatif aux deux touches "privé" d'un bloc de commutation ;

- la Fig. 11 est une vue en perspective montrant en détail une paire de lames conductrices flexibles commandées par une touche "privé" et son implantation sur la plaque à circuit imprimé du poste ;

- la Fig. 12 est une vue en perspective détaillant le montage de la paire de lames montrée à la Fig. 11 dans l'assise d'une touche "privé" ;

- les Figs. 13A à 13C représentent schématiquement les phases de verrouillage et de déverrouillage de deux touches "privé" ;

- les Figs. 14A à 14C représentent schématiquement les phases de déverrouillage d'une touche "privé" par l'enfoncement d'une touche "réseau";

- la Fig. 15 représente schématiquement le déverrouillage d'une touche "privé" par le raccrochage du combiné du poste ;

- la Fig. 16 est une vue de face verticale arrière, partiellement en coupe, du mécanisme de commutation pour un poste téléphonique dit simple appel ; et

- les Figs. 17A et 17B sont des vues en coupe de côté du mécanisme montré à la Fig. 16, respectivement aux raccrochage et décrochage.

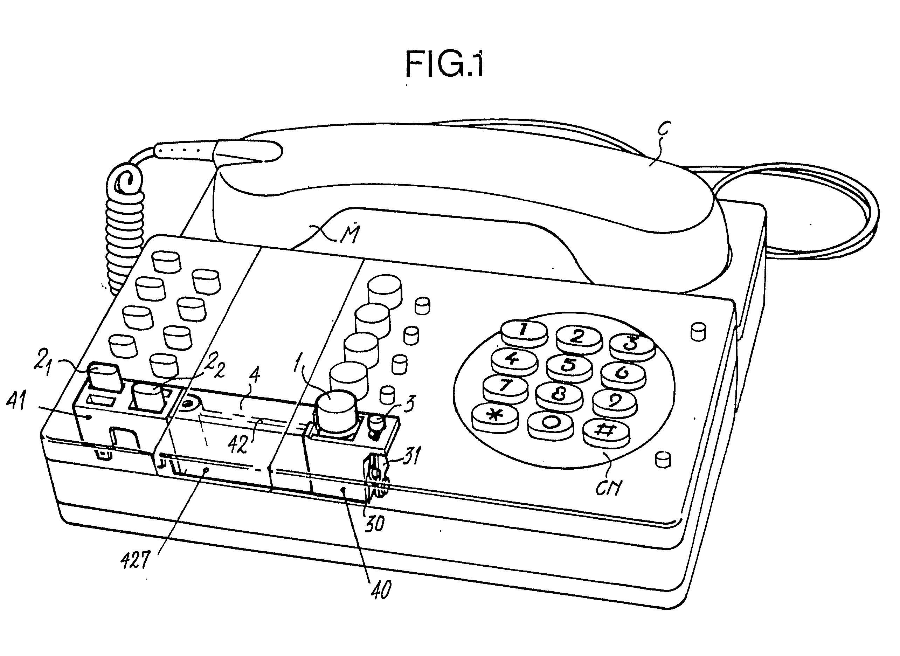

La Fig. 1 représente l'aspect général extérieur d'un poste téléphonique d'intercommunication conforme à l'invention. Selon la réalisation illustrée, il supporte, sur la face supérieure de son boîtier, le combiné C positionné transversalement en arrière. Le microphone M du combiné, par son propre poids sur la pédale du mécanisme de verrouillage "réseau" et "privé", assure la libre poussée des touches dites "réseau" 1 et des touches dites "privé" 2. En avant du combiné, sont logés dans le poste, d'une part les moyens de commutation "réseau" et "privé" et, d'autre part, le clavier de numérotation CN ou le cadran de numérotation selon une autre variante. Selon l'exemple illustré, le poste téléphonique comporte cinq touches "réseau" 1, sélectionnant chacune une ligne téléphonique desservant le poste, et dix touches "privé" 2, sélectionnant chacune un poste local desservi par une ligne téléphonique privée de l'installation d'intercommunication de l'abonné. Les touches "privé" 2 sont réparties à gauche du boîtier en deux colonnes en quinconce à cinq touches et les touches "réseau" 1 sont disposées le long d'une colonne. Comme montré en trait plein sous le couvercle du boîtier, chaque paire de touche "privé" voisines $2_1$ et $2_2$, appartenant aux deux colonnes, est disposée avec une touche "réseau" 1 et son bouton de garde 3 dans un bloc de commutation 4, parallélépipédique transversal. Le poste comporte ainsi cinq blocs de commutation 4.

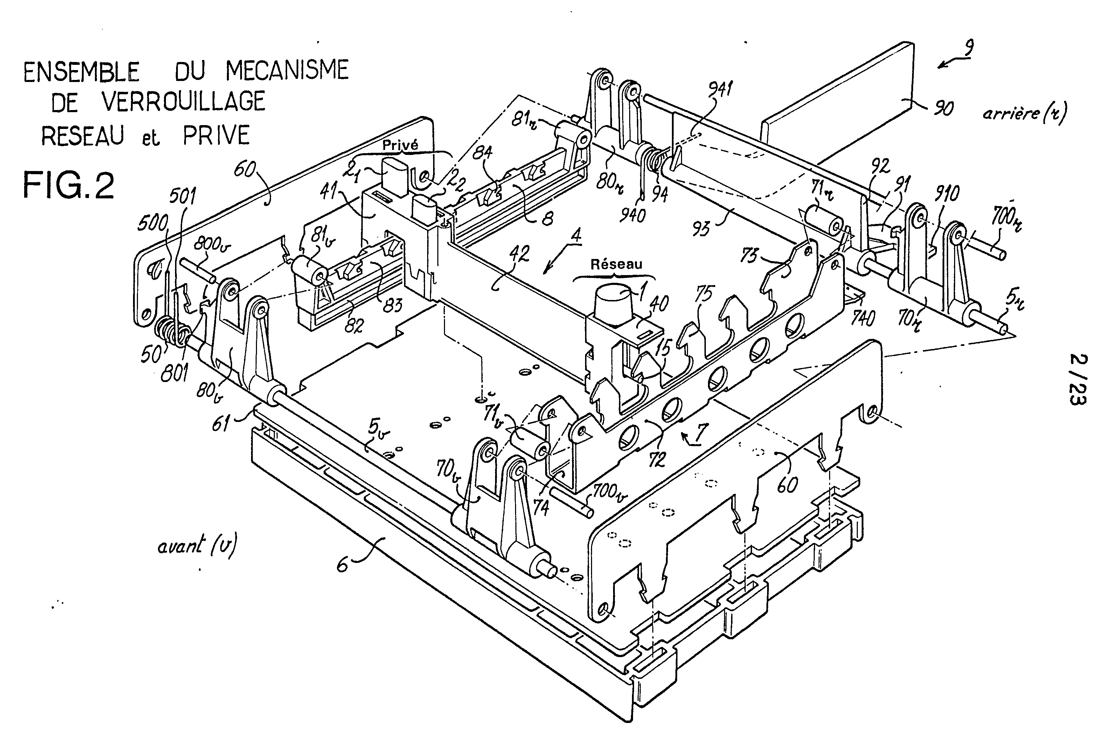

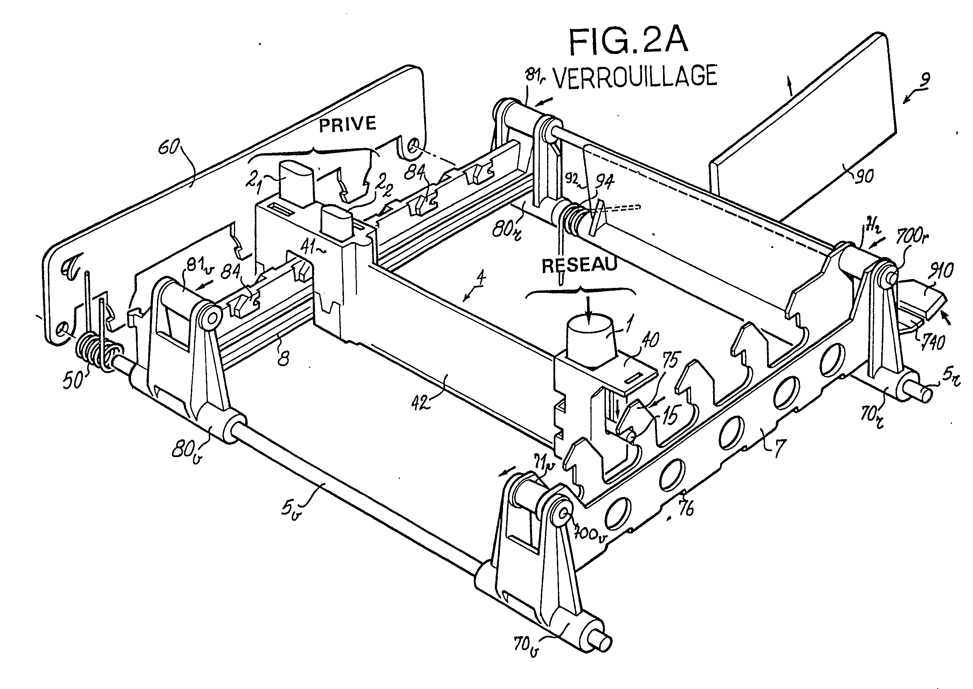

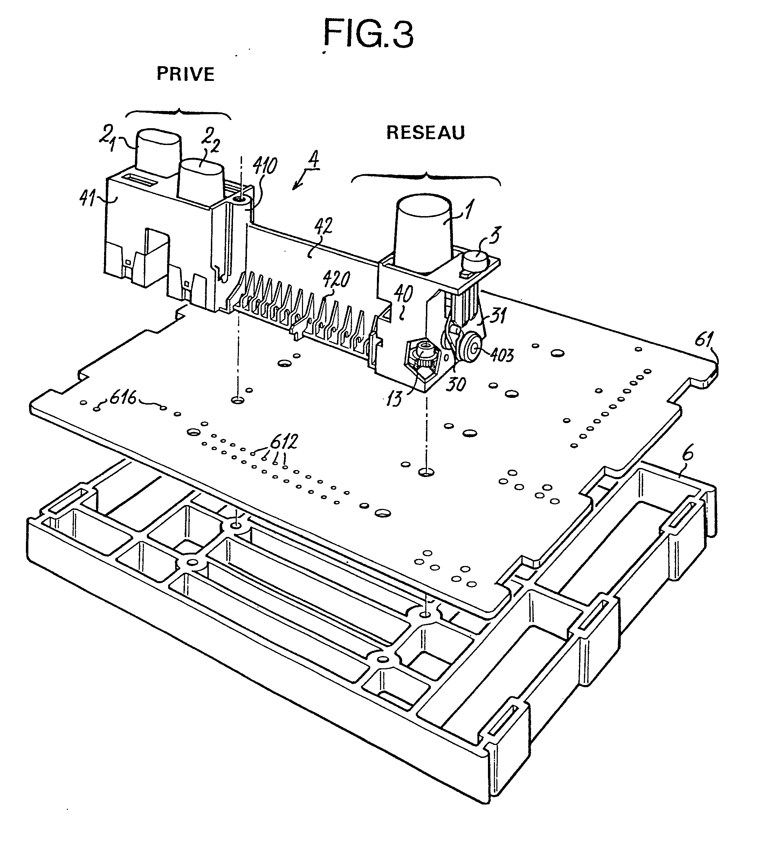

Un tel bloc de commutation 4 est représenté schématiquement en position dans le mécanisme de verrouillage "réseau" et "privé" aux Figs. 2, 2A, 2B et 3. Le bloc 4 montré sur ces figures est relatif à la seconde rangée d'une paire de touches "privé" $2_1$, $2_2$ et d'une touche "réseau" 1, à partir de l'avant du poste.

Sur les Figs. 2, 2A et 2B, on retrouve les principaux éléments constituant le poste téléphonique d'intercommunication selon le brevet précité, mais qui ont cependant une structure et une disposition différentes. En effet, le mécanisme de verrouillage "réseau" et "privé" est constitué essentiellement par deux ossatures à parallélogramme déformable vertical qui sont solidaires et translatées simultanément d'arrière vers l'avant lors du décrochage (Fig. 2A) et d'avant vers l'arrière lors du raccrochage (Fig. 2B). L'un des deux parallélogrammes déformables (à droite sur les Figs. 2 à 2B) est destiné aux verrouillage et déverrouillage des touches "réseau" 1. L'autre parallélogramme déformable (à gauche sur les Figs. 2 à 2B) est destiné aux verrouillage et déverrouillage des touches "privé" 2.

Les sommets inférieurs avant des parallélogrammes, resp. les sommets inférieurs arrière des parallélogrammes sont respectivement solidaires par des axes parallèles avant $5_v$, resp. arrrière $5_r$ qui sont fixés au châssis 6, ou fond du boîtier du poste téléphonique, par l'intermédiaire de pans longitudinaux verticaux 60 s'emboîtant par encliquetage dans celui-ci. Les grands côtés des parallélogrammes sont longitudinaux. Les côtés longitudinaux supérieurs peuvent être translatés et sont formés par des râteliers dits "réseau" 7 et "privé" 8. Ces râteliers 7, resp. 8 sont suspendus à rotation à leur deux extrémités, au-dessus des axes $5_v$, resp. $5_r$. Chaque râtelier 7, 8 commande, par son mouvement de va-et-vient, lors des différentes opérations inhérentes à la sélection d'une ligne "réseau", resp. d'un poste local, le verrouillage et le déverrouillage des touches "réseau" 1, resp. des touches "privé" 2, comme on le verra dans la suite.

Aux extrémités d'un râtelier 7, resp. 8, sont prévues des chapes avant et arrière $70_v$ et $70_r$, resp. $80_v$ et $80_r$, en forme de U orienté vers le haut. Ces chapes constituent les petits côtés des parallélogrammes. Les chapes avant $70_v$, $80_v$ ont leurs bases traversées par l'axe avant $5_v$ et sont solidaires de celui-ci par thermocollage ou analogue. Les chapes arrière $70_r$, $80_r$ ont leurs bases, de préférence, tournantes autour de l'axe arrière $5_r$. Entre les deux branches de chaque chape avant $70_v$, $80_v$ est fixé un tourillon transversal $700_v$, $800_v$ sur lequel est monté tournant un manchon $71_v$, $81_v$. Le manchon $71_v$ est entretoisé par les extrémités avant des deux branches longitudinales 72 et 73 du râtelier "réseau" 7, qui a un profil transversal en U orienté vers le haut. Les branches 72, 73 sont également entretoisées par les branches de la chape $70_v$ et sont montées à rotation libre autour du tourillon $700_v$. Par contre, le manchon avant $81_v$ du râtelier "privé" 8 est solidaire de l'extrémité avant du râtelier "privé" 8 et est directement issu du moulage de ce dernier. La semelle 82 du râtelier "privé" 8 coulisse entre les deux touches "privé" $2_1$, $2_2$ de chaque bloc de commutation 4 -comme on le verra dans la suite- et est surmontée centralement et longitudinalement d'une nervure verticale 83 qui est terminée par

le manchon avant $81_v$ et un manchon arrière $81_r$ analogues la surplombant. Le manchon avant $81_v$ tourne librement autour du tourillon $800_v$, entre les branches de la chape avant $80_v$. Les manchons arrière $71_r$ et $81_r$ des râteliers 7 et 8 sont montés d'une manière analogue entre les branches des chapes arrière $70_r$ et $80_r$ et à rotation libre autour d'un axe commun transversal supérieur $700_r$, faisant office de tourillon. Cependant, conjointement à la liaison rigide des chapes avant $70_v$ et $80_v$ avec l'axe $5_v$, le manchon $71_r$ peut être solidaire du grand tourillon $700_r$. Ceci permet de maintenir parallèles et à distance constante les râteliers 7 et 8 lors de leur introduction entre les branches des chapes. Ceci contribue également, en fonctionnement, à imposer le parallélisme du coulissement de la branche 73 du râtelier 7, entre les blocs 40 des touches "réseau" 1 et les cliquets 30 des boutons de garde 3, et du coulissement de la semelle 82 du râtelier 8 qui traverse les blocs 41 contenant chacun une paire de touches "privé" $2_1$, $2_2$. Les râteliers 7 et 8 sont ainsi suspendus librement à rotation aux extrémités supérieures des chapes $70_r$, $70_v$ et $80_r$, $80_v$.

Sur les Figs. 2, 2A et 2B est également représentée la pédale monobloc 9, actionnée lors du décrochage ou du raccrochage du combiné C, et la plaque à circuit imprimé 61 (Fig. 3), recouvrant le fond 6, qui comporte sur sa face supérieure des extrémités de conducteurs, telles que des plots, plages conductrices ou analogues, à relier deux à deux par l'enfoncement des touches.

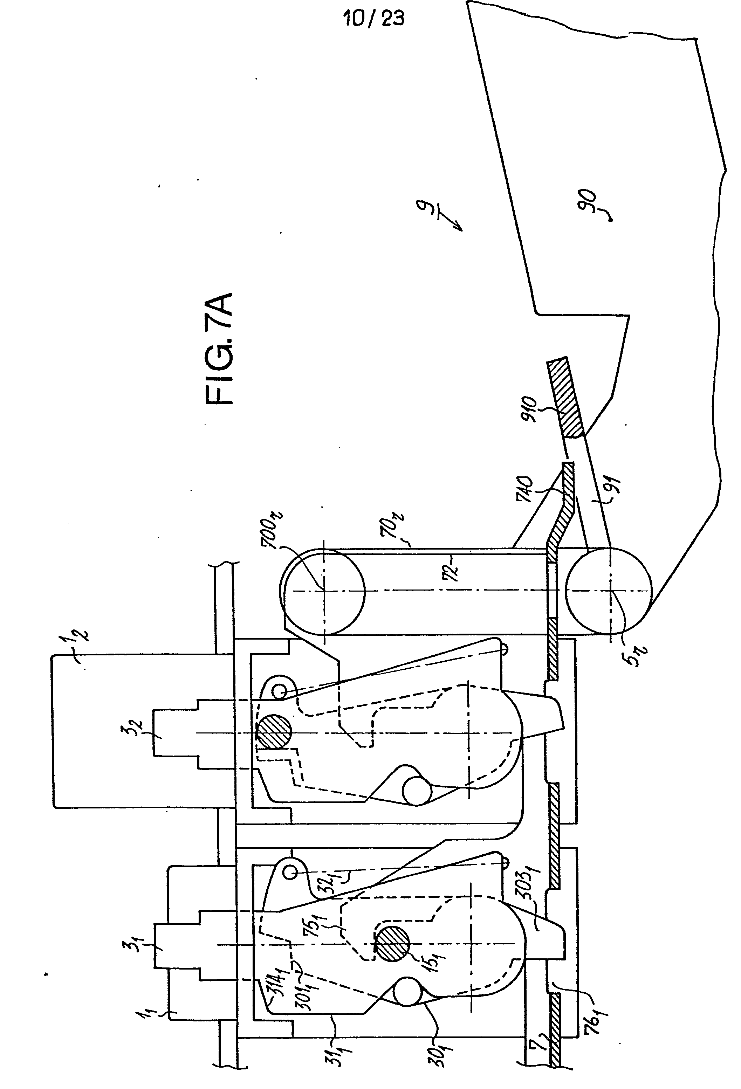

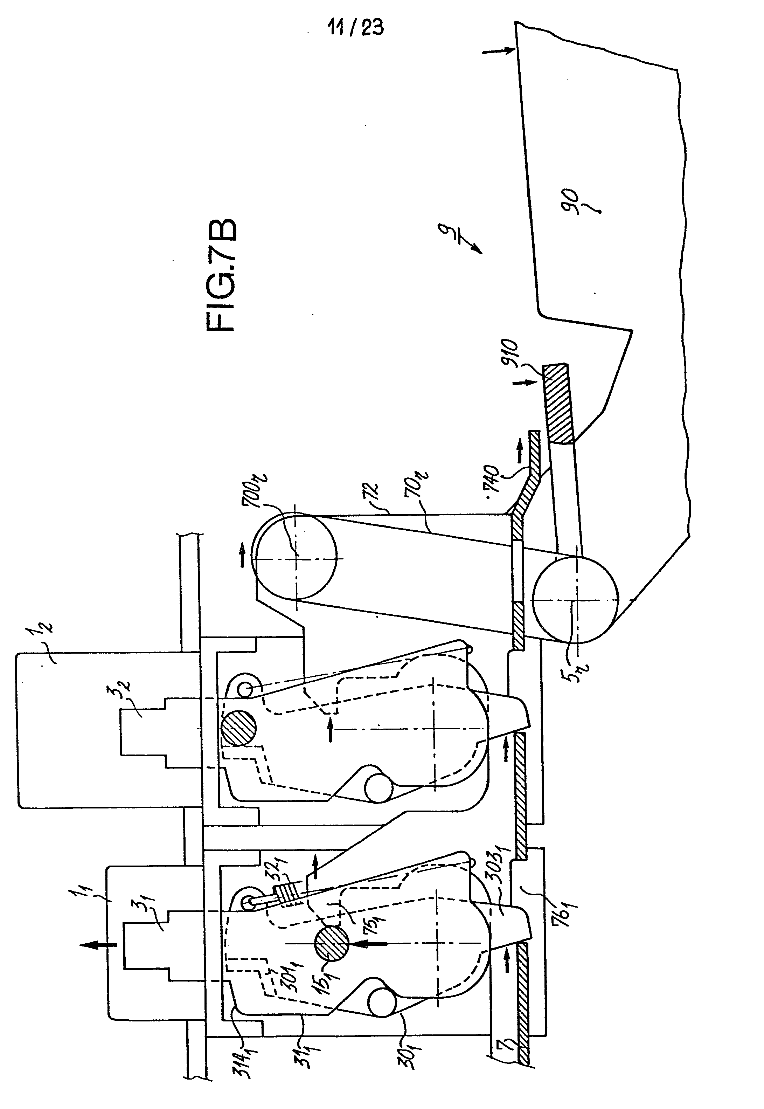

La pédale 9 est monobloc. Elle est constituée par un bras de levier vertical longitudinal arrière 90, qui émerge en partie du logement destiné au microphone M (ou à l'écouteur du combiné) lorsque le combiné C est décroché, par une semelle sensiblement horizontale 91 (voir également les Figs. 7A et 7B) qui s'étend transversalement en arrière et sensiblement au niveau du fond 74 du râtelier "réseau" 7, et par un bras de levier transversal, pratiquement vertical, 92. La pédale 9 comprend également un cylindre creux 93 qui relie la base du bras de levier 92 au levier arrière longitudinal 90 et à la semelle 91. L'axe arrière $5_r$ traverse le cylindre 93 et est solidaire de celui-ci par thermocollage par exemple, afin de maintenir les bases cylindriques des chapes arrière $70_r$ et $80_r$ à une distance égale à celle entre les chapes avant solidaires $70_v$, $80_v$. Un ressort hélicoïdal 94 rappelle en butée vers le haut la pédale 9, lors du décrochage, et présente, bien entendu, une contrainte moindre que celle exercée par le poids du microphone M du combiné C lors du raccrochage. A cette fin, le ressort 94 est monté autour de l'axe arrière $5_r$, par exemple entre la base de la chape $80_r$ et le cylindre 93 de la pédale. L'un, 940, des brins du ressort 94 est fixé dans un logement vertical du fond 6. L'autre brin 941 du ressort 94 est appliqué,sensiblement horizontal,contre le dessous de la semelle 91 ou contre la face arrière du levier transversal 92 de la pédale 9 pour rappeler celle-ci vers le haut, en butée sous le couvercle du boîtier, comme montré à la Fig. 2A, ou pour s'opposer au poids du microphone M, comme montré à la Fig. 2B. L'extrémité de droite, 910, côté râtelier "réseau" 7, de la semelle 91 de la pédale est prévue de manière qu'elle joue le rôle d'une butée d'inertie vers l'arrière de l'ensemble des parallélogrammes déformables, lors du verrouillage d'une touche. Comme on le verra dans la suite, cette butée s'escamote vers le bas, lors du raccrochage, relativement à l'arrière 740 du fond 74 du râtelier "réseau" 7. A cet égard, au repos, combiné raccroché (Fig. 2B), ou éventuellement combiné décroché, un ressort 50 rappelle vers l'avant l'ensemble des râteliers 7 et 8 par mise en butée du grand tourillon arrière $700_r$ contre la face arrière du bras transversal 92 de la pédale 9. Le ressort 50 est, par exemple, hélicoïdal et monté autour de l'axe avant $5_v$, entre la chape $80_v$ et le pan voisin 60 du fond du boîtier. L'un, 500,des brins du ressort 50 est fixé dans le boîtier. L'autre brin 501 est appliqué contre l'arrière d'une saillie 801 de la branche de gauche de la chape avant $80_v$. Ce brin 501 contraint les parallélogrammes déformables à une translation vers l'avant. Au raccrochage, le déplacement vers l'avant du tourillon $700_r$ est empêché par sa mise en butée contre le bras 92 de la pédale 9. Après décrochage et dégagement vers l'avant du bras 92, les extrémités avant du fond 74 du râtelier "réseau" 7 et de la semelle 82 du râtelier "privé" 8 butent contre les faces arrière des chapes avant $70_v$ et $80_v$. Ainsi, comme il est connu, le poids du microphone s'exerce, lors du raccrochage, à l'opposé des contraintes additionnelles des ressorts 50 et 94.

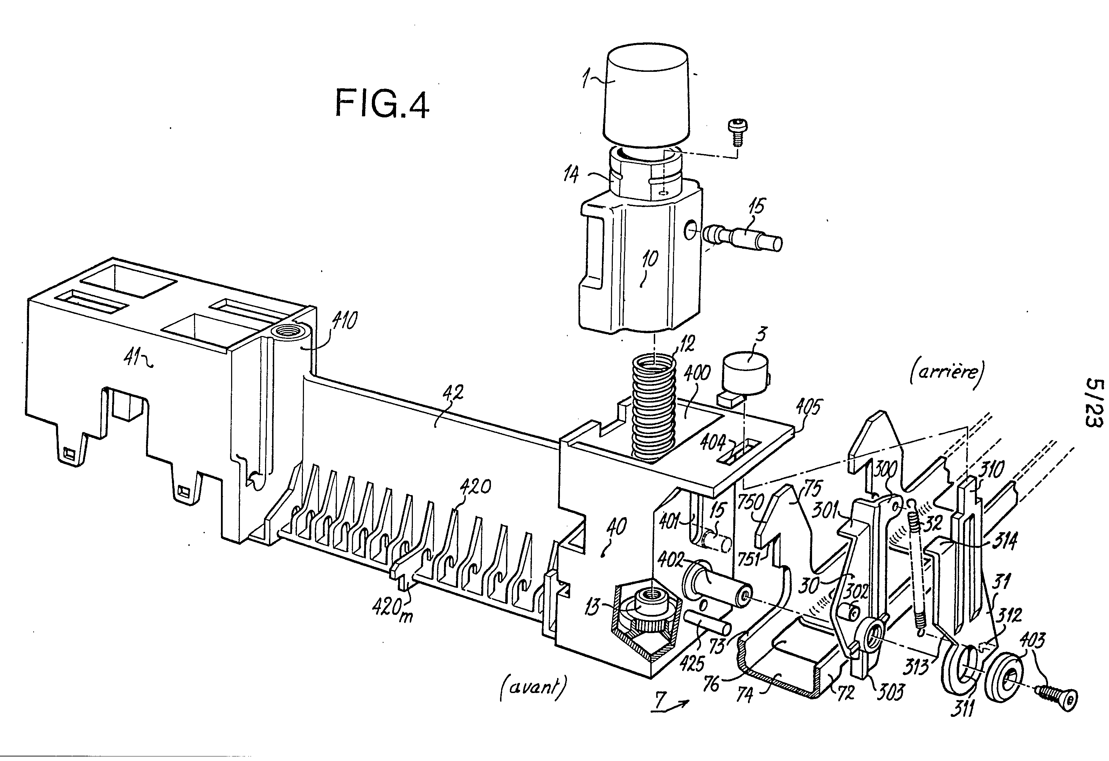

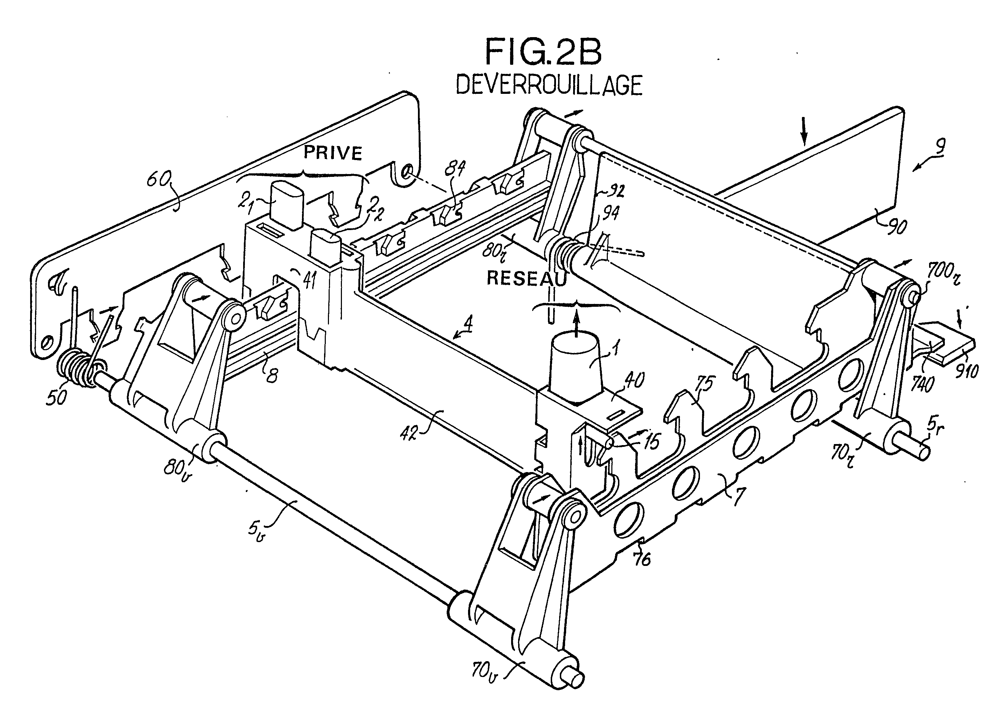

En se reportant maintenant à la Fig. 4, on décrit la partie de droite d'un bloc de commutation 4 guidant verticalement une touche "réseau" 1 et un bouton de garde 3. Cette partie a la forme d'un parallélépipède creux 40 qui est relié au parallélépipède creux 41, guidant deux touches "privé" $2_1$ et $2_2$, par une plaque transversale verticale 42 dans laquelle sont logées des lames de contact commandées par l'enfoncement de la touche "réseau" 1. Le bloc de commutation 4 est en matière plastique et monobloc.

Le parallélépipède 40 comporte une cavité parallélépipédique 400, ouverte vers le haut, dans laquelle coulisse la base 10 de la touche 1. La partie inférieure de la base 10 est percée d'un alésage central borgne qui guide le ressort de rappel hélicoïdal vertical 12 de la touche. Le ressort 12 s'appuie sur le fond du parallélépipède 40 par centrage sur un picot 13 qui est percé d'un trou taraudé pour la fixation du bloc 4 sur le fond du boîtier 6 du poste, à travers la plaque à circuit imprimé 61, comme montré à la Fig. 3. L'extrémité supérieure du ressort 12 est en butée contre le fond de l'alésage borgne précité qui est surmonté par un petit cylindre creux 14 qui s'encliquète dans le cylindre creux de préhension de la touche 1 le chapeautant. La face de droite verticale de la base 10 de la touche est solidaire d'un téton cylindrique 15, rentré à force, qui est destiné à coopérer avec le crochet de verrouillage correspondant 75 du râtelier "réseau" 7 et le cliquet de garde associé 30. A cet égard, comme montré aux Figs. 2 et 4, la branche de gauche 73 du râtelier 7 comporte un nombre de crochets de verrouillage 75 égal à celui des touches "réseau" 1. Ces crochets sont verticaux et présentent chacun, en avant, un pan coupé 750 sur lequel, après décrochage du combiné, glisse le téton 15 en fin de course descendante de la touche, et, en dessous, une entaille 751 qui retient le téton 15 à l'encontre du ressort de rappel 12, après enfoncement à fond de la touche 1 et relâchement. A cette position, la touche 1 est dite verrouillée, comme montré à la Fig. 2A et, la ligne "réseau" associée est reliée au circuit audio du poste téléphonique. La course du téton 15 est guidée et limitée par une lumière verticale 401 de la face de droite du parallélépipède 40.

En dessous de la lumière 401 et venu de moulage du parallélépipède 40, un axe creux 402 est prévu pour le montage à rotation du cliquet 30 et de la base 31 du bouton de garde associé 3. Le cliquet 30 comporte à gauche un bossage (non visible sur les figures) qui entoure l'axe 402 et qui est plaqué contre le parallélépipède 40, au moyen de vis et rondelle de serrage 403 vissée dans le trou taraudé de l'axe 402. La hauteur du bossage est telle que le crochet 75 du râtelier 7 passe librement entre la face de droite du parallélépipède 40 et le cliquet de garde 30. La base 31 du bouton de garde 3 présente uniquement un mouvement en translation verticale qui est obtenu par guidage de son extrémité supérieure 310 dans une lumière 404 qui est pratiquée dans une saillie horizontale supérieure 405 du parallélépipède 40, et par guidage d'un trou oblong vertical 311, à sa partie inférieure, qui est traversé par l'axe 402. Le bouton 3 s'emboîte sur l'extrémité supérieure 310, au-dessus de la saillie 405. La longueur du trou oblong 311 délimite, par butée contre l'axe 402, la faible course verticale de la base 31 du bouton de garde 3.

Le cliquet de garde 30 est rappelé par un ressort 32, pratiquement vertical, dont une extrémité est ancrée à une saillie percée supérieure arrière 300 du cliquet 30 et dont l'autre extrémité est ancrée à un crochet inférieur arrière 312 de la base 31 du bouton de garde. Le ressort de rappel 32 applique en butée le côté vertical arrière d'une petite entaille saillante supérieure 301 du cliquet 30 contre le téton 15, lorsque la touche est déverrouillée, après décrochage du combiné C. Le côté horizontal inférieur de l'entaille 301 retient le téton 15, et, par suite, la touche 1 en position de garde de la ligne "réseau", lorsqu'après décrochage, la touche 1 a été enfoncée sensiblement à mi-course ou lorsque la touche 1 a été verrouillée par le crochet 75 du râtelier "réseau" 7 et relâchée par celui-ci, suite au verrouillage d'une seconde touche 1 ou 2, correspondant à une translation en arrière puis en avant des râteliers 7 et 8. Au-dessus et en avant de l'axe 402, le cliquet de garde 30 est muni d'un téton 302 coopérant avec une échancrure avant 313 de la base 31 du bouton de garde. Le profil en angle obtu de l'échancrure 313 est tel que, lorsque la touche 1 est enfoncée pour son verrouillage par le crochet 75, le téton 302 est appliqué dans le sommet de l'échancrure 313 par rotation vers l'arrière du cliquet 30 autour de l'axe 402 sous la traction du ressort 32, l'entaille 301 s'alignant verticalement au-dessus du téton 15 de la touche verrouillée 1, et est tel que, lorsque le bouton de garde 3 est enfoncé après remontée de la touche 1 en position de garde par butée de son téton 15 contre le côté horizontal de l'entaille 301, le contour supérieur de l'échancrure 313 ramène verticalement le cliquet 30, pour laisser remonter le téton 15 qui, en fin de course, bute contre l'extrémité supérieure de la lumière 401 et empêche la rotation du cliquet 30 par application du côté vertical de l'entaille 301 sous l'action du ressort 32. Il apparaît ainsi que le cliquet 30 a un déplacement à l'intérieur d'un secteur angulaire très faible. On notera que, en position de déverrouillage (Fig. 2B), la touche 1 peut être enfoncée et relâchée jusqu'à sa position de repos sans que le déplacement concomitant du téton 15 soit entravé par l'entaille 301 du cliquet 30. En effet, l'extrémité inférieure 303 du cliquet 30 est poussée vers l'arrière par le bord avant d'une lumière 76 du fond 74 du râtelier "réseau", lui-même chassé vers l'arrière par la poussée du bras vertical 92 de la pédale 9 contre le tourillon $700_r$ (Fig. 2B). Par suite, le côté vertical de l'entaille 301 du cliquet 30 pivote vers l'avant, dégage la course ascendante du téton 15 et bute, éventuellement par inertie contre une saillie horizontale avant 314 de la base 31 du bouton de garde. Ainsi, l'entraînement vers l'arrière du tourillon $700_r$ et des râteliers 7 et 8 permet le dégagement des crochets 75 de la course libre des tétons 15 des touches, lors du raccrochage.

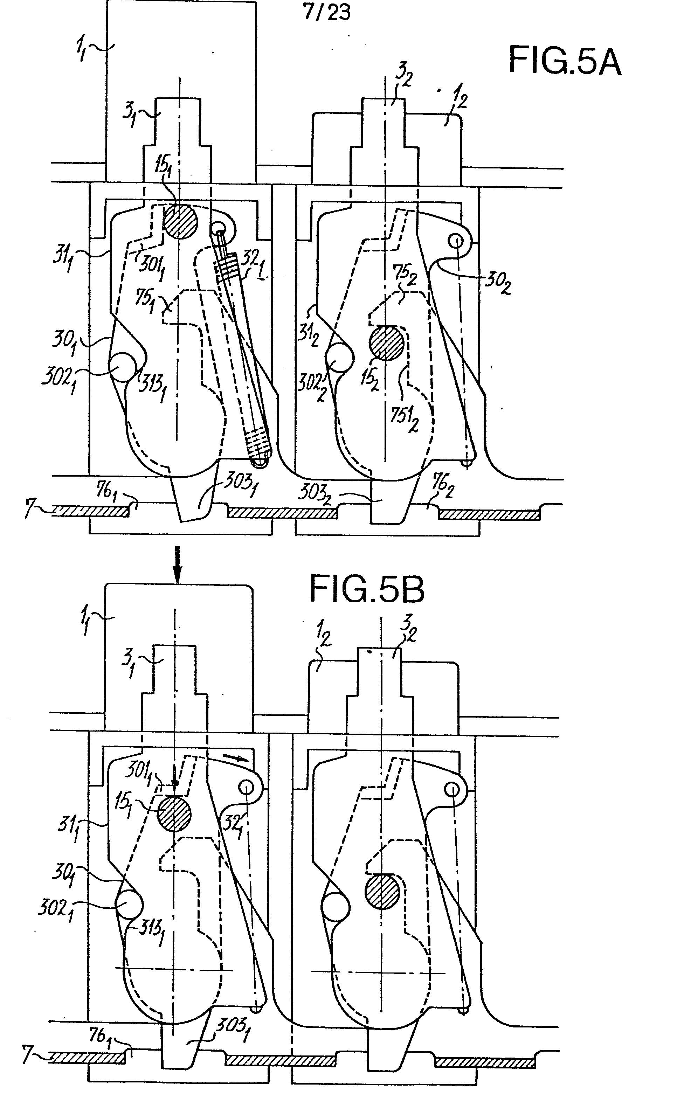

On décrit maintenant, à titre d'exeple non limitatif, les différentes positions des éléments constituant le mécanisme de verrouillage "réseau" dans le cas où deux touches "réseau" $1_1$ et $1_2$ sont initialement, après décrochage, en position dite "repos" et en position dite "verrouillage", montrées à la Fig. 5A. Les râteliers 7 et 8 sont en butée contre les faces arrières des chapes avant $70_v$ et $80_v$, sous la contrainte du ressort 50. Le tourillon arrière $700_r$ n'est plus au contact du bras 92 de la pédale 9 venant buter sous le couvercle du boîtier sous l'action du ressort 94. Les éléments respectivement associés aux touches $1_1$ et $1_2$ sont désignés sur les Figs. 5A à 7C par les repères précités, mais avec les indices respectifs 1 et 2.

La première touche "réseau" $1_1$ est enfoncée à mi-course (Fig. 5B). Le téton $15_1$ passe sous l'entaille $301_1$ du cliquet de garde $30_1$ qui, par la tension du ressort $32_1$, pivote et retient dans cette position le téton $15_1$. Le téton $302_1$ du cliquet de garde $30_1$ est alors encastré dans le sommet de l'échancrure $313_1$ de la base $31_1$ du bouton de garde $3_1$ et l'extrémité inférieure $303_1$ de la base $31_1$ pivote vers l'avant pour s'aligner avec l'axe vertical de la touche $1_1$. Au cours de cette opération, la seconde touche "réseau" $1_2$ reste en position "verrouillage".

La touche $1_1$ est à nouveau enfoncée (Fig. 5C). Le téton $15_1$ vient en appui sur le pan coupé $750_1$ à 45° du crochet $75_1$ du râtelier

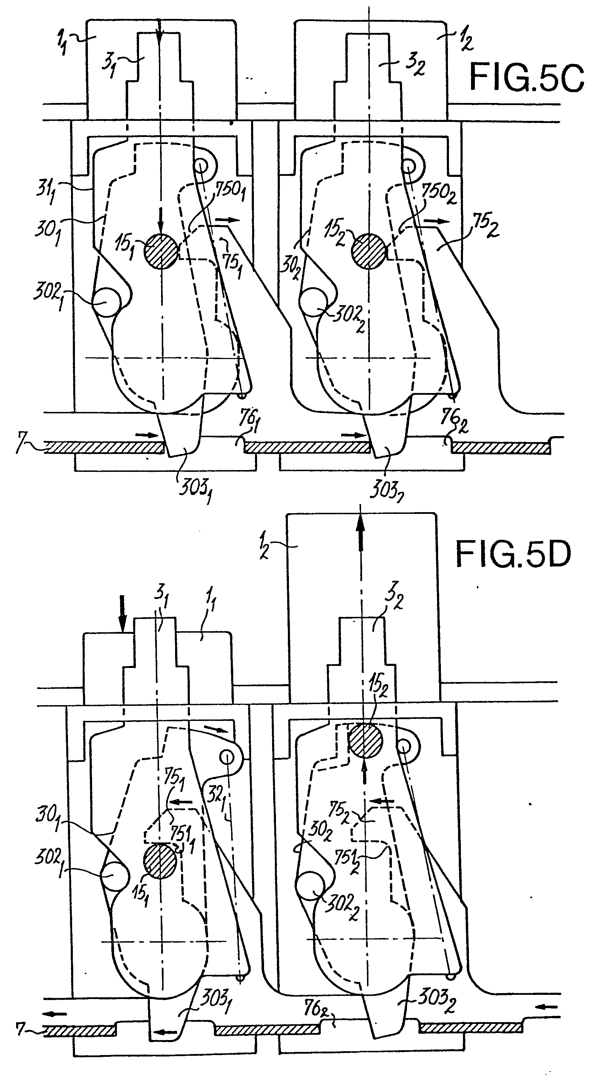

"réseau" 7 qui est chassé vers l'arrière et qui déverrouille ainsi le téton $15_2$ de la touche $1_2$ qui se trouvait en position "verrouillage". La translation vers l'arrière du râtelier 7 contraint les cliquets 30 à pivoter par poussée des extrémités avant des lumières $76_1$, $76_2$ contre les extrémités inférieures $303_1$, $303_2$ des cliquets de garde (Fig. 5C). Si une telle position de la touche $1_1$ est maintenue, une touche "réseau", initialement verrouillée en position de garde ou en prise de ligne (Figs. 5A et 5D), est déverrouillée pour remonter en position "repos". En fin de course descendante de la touche "réseau" $1_1$ (Fig. 5D), le téton $15_1$ s'engage dans l'entaille $751_1$ du crochet $75_1$ qui, sous l'action du ressort de rappel 50 (Fig. 2A), reprend sa position initiale, verrouillant ainsi le téton $15_1$ de la touche $1_1$.

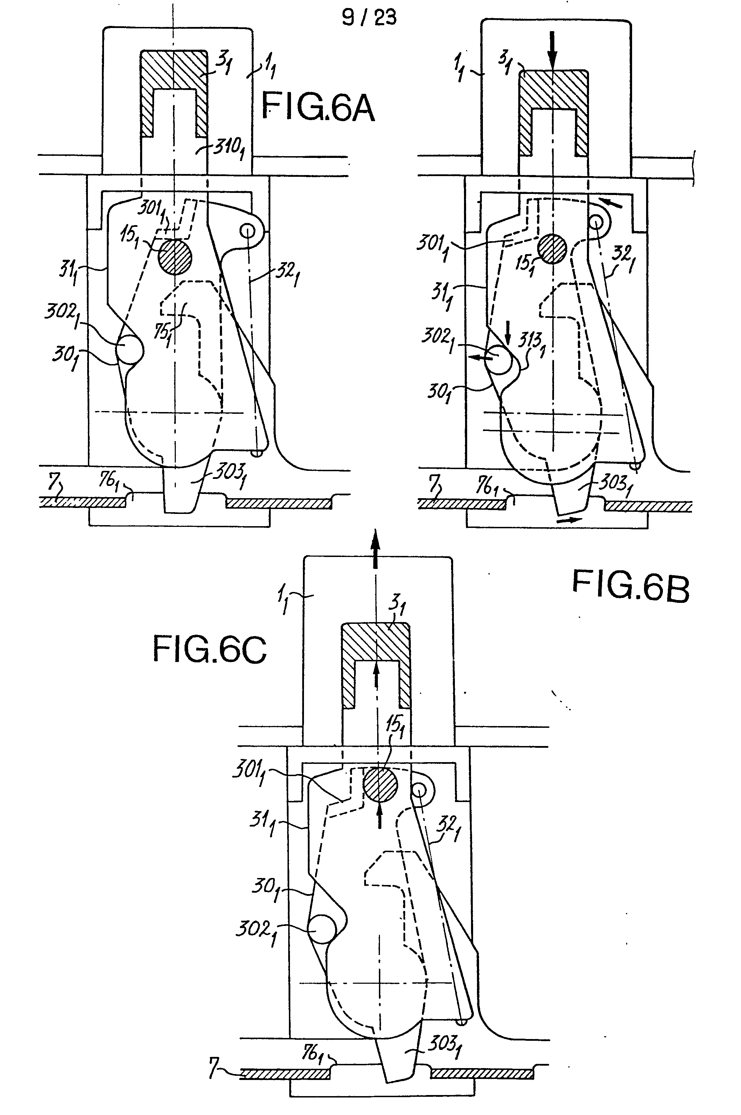

Lorsque la touche $1_1$ est en position de garde de la ligne "réseau" associée, le téton $15_1$ est verrouillé par la retenue de l'entaille $301_1$ du cliquet de garde $30_1$, comme montré à la Fig. 6A. Pour déverrouiller la touche "réseau" $1_1$, le bouton de garde $3_1$ est enfoncé. La descente verticale de la base $31_1$ du bouton de garde $3_1$ permet la poussée vers l'avant du téton $302_1$ du cliquet de garde $30_1$ par l'échancrure $313_1$ (Fig. 6B). L'arrière de l'entaille $301_1$ dégage le téton $15_1$ de la touche $1_1$ qui, libérée, remonte et reprend sa position "repos" sous l'action du ressort de rappel 12 de la touche $1_1$ (Fig. 6C). Sous la traction exercée par le ressort $32_1$, le bouton de garde $3_1$, relâché, remonte à sa position initiale de repos et la face arrière de l'entaille $301_1$ est appliquée contre le téton $15_1$. Après décrochage, tant que les râteliers 7 et 8 ne sont pas sollicités, la longueur des lumières 76 du fond 74 du râtelier "réseau" 7 permet le libre débattement des extrémités inférieures 303 des cliquets de garde 30 (Figs. 5A, 5B, 6A à 6C).

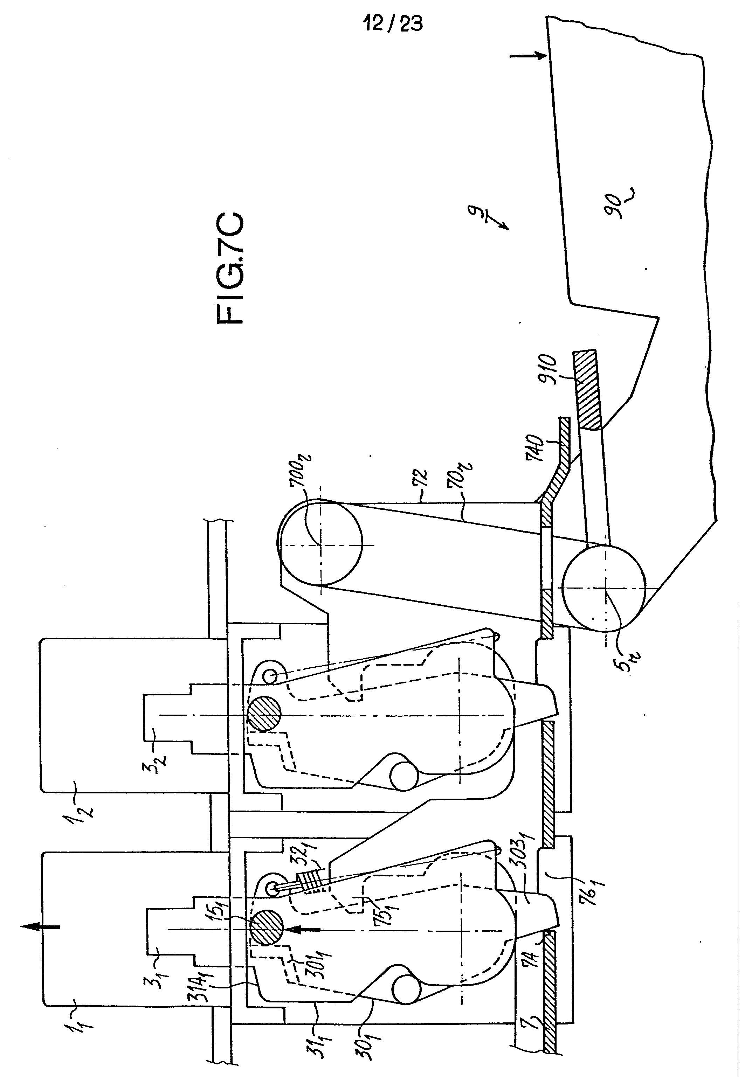

En se reportant à nouveau à la position de verrouillage d'une touche "réseau", celle-ci peut être déverrouillée de deux façons, en enclenchant une autre touche "réseau" en position verrouillage, telle que $1_1$ montrée aux Figs. 5C et 5D, ou en actionnant la pédale 9 du combiné, soit manuellement, soit en reposant le combiné dans son logement, le bras 90 de la pédale étant appliqué contre le microphone par l'action du ressort 94 et, dans une faible mesure, par celle du ressort 50. Cette dernière manipulation est représentée aux Figs. 7A à 7C. La Fig. 7A montre une touche "réseau" $1_1$ en position verrouillage et une

touche "réseau" $1_2$ en position repos. Le têton $15_1$ de la touche $1_1$ est en position verrouillage, maintenu par le crochet $75_1$ du râtelier "réseau" 7. Le ressort 94 maintient le bras 92 de la pédale 9 devant le tourillon $700_r$, les râteliers 7 et 8 étant en butée contre les chapes avant $70_v$ et $80_v$ sous l'action du ressort 50, et maintient également la partie de droite 910 de la semelle 91 de la pédale en prolongement de l'arrière 740 du fond du râtelier "réseau" 7 (Fig. 7A). Cette partie de semelle 910 sert de butée d'inertie, c'est-à-dire de butée de fin de course arrière des râteliers 7 et 8, lorsque l'un d'eux est sollicité brusquement par l'enfoncement en position de verrouillage d'une touche "réseau" 1 ou d'une touche "privé" 2. La rotation de la pédale 9 vers le bas entraîne, à l'encontre des ressorts 50 et 94, la poussée vers l'arrière du tourillon $700_r$ appliquée contre l'arrière du bras 92 sous l'action du ressort 50 et le pivotement des chapes 70 et 80 autour des axes 5. Par suite, les râteliers 7 et 8 sont translatés librement vers l'arrière. En effet, l'extrémité 910 de la semelle 91 de pédale est escamotée de la course vers l'arrière 740 du fond du râtelier "réseau" 7 et ne limite plus la course des râteliers (Fig.7B). Les extrémités inférieures 303 des cliquets de garde 30 entraînées vers l'arrière par les lumières 76 du râtelier "réseau" 7. Eventuellement, les faces verticales avant des entailles 301 des cliquets de garde 30 butent contre l'arrière des saillies d'inertie 314 des bases 31 des boutons de garde 3. Le crochet $75_1$, ayant reculé, libère le têton $15_1$ de la touche $1_1$ qui n'est pas entravé au cours de sa remontée par l'entaille $301_1$ du cliquet de garde $30_1$, ayant pivoté vers l'avant (Fig. 7C).

Ainsi, après raccrochage, le têton $15_1$ de la touche $1_1$ se trouve en position repos comme montré à la Fig. 7C. Le crochet $75_1$ reste en position arrière et l'extrémité inférieure $303_1$ du cliquet de garde $30_1$, sous la poussée du fond 74 du râtelier "réseau", fait pivoter vers l'avant le cliquet de garde et le maintient dans cette position. La pédale du combiné 9 reste en position enfoncée. Aucune touche actionnée ne peut être mise, soit en position de garde, soit en position de verrouillage, puisque la descente du têton $15_1$ n'est pas entravée d'une part,par l'entaille $301_1$ du cliquet de garde $30_1$, dont l'extrémité inférieure $303_1$ est poussée par le fond 74 du râtelier "réseau" 7 et, d'autre part, par le crochet de verrouillage $75_1$ du râtelier poussé vers l'arrière par le bras 92 de la pédale. Ainsi, lorsque le combiné est raccroché, la poussée vers l'arrière du bras 92 (Fig. 2B) s'exerce à l'encontre des ressorts de rappel 50 et 94 et, dans une faible mesure, à l'encontre des ressorts de rappel 32 des cliquets de garde 30.

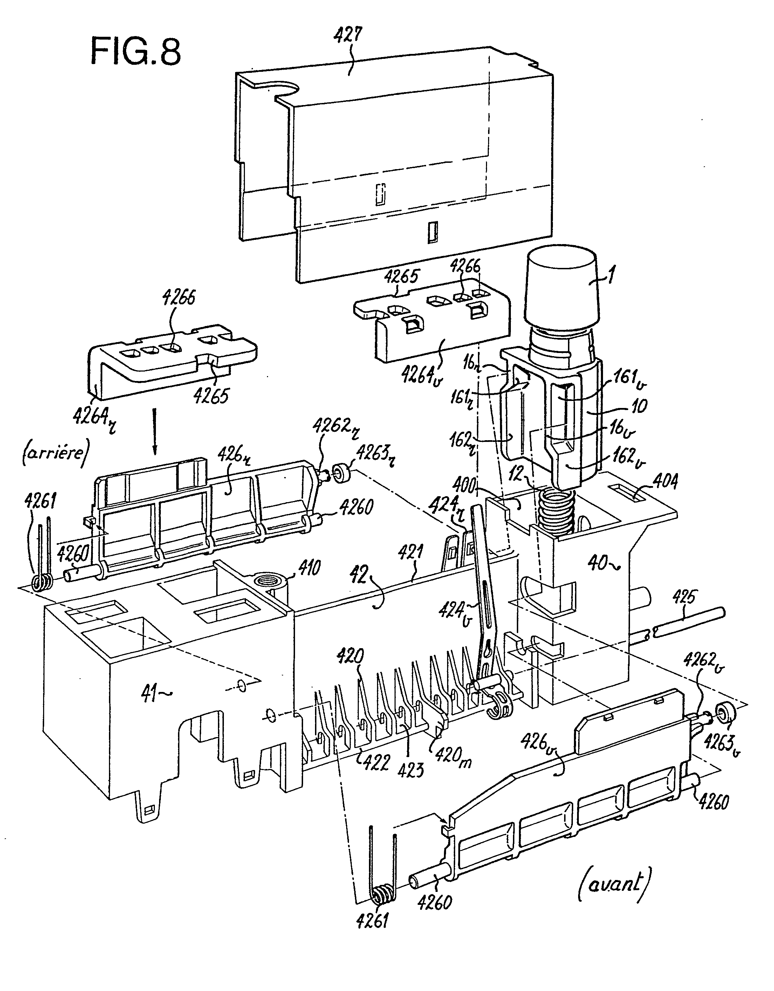

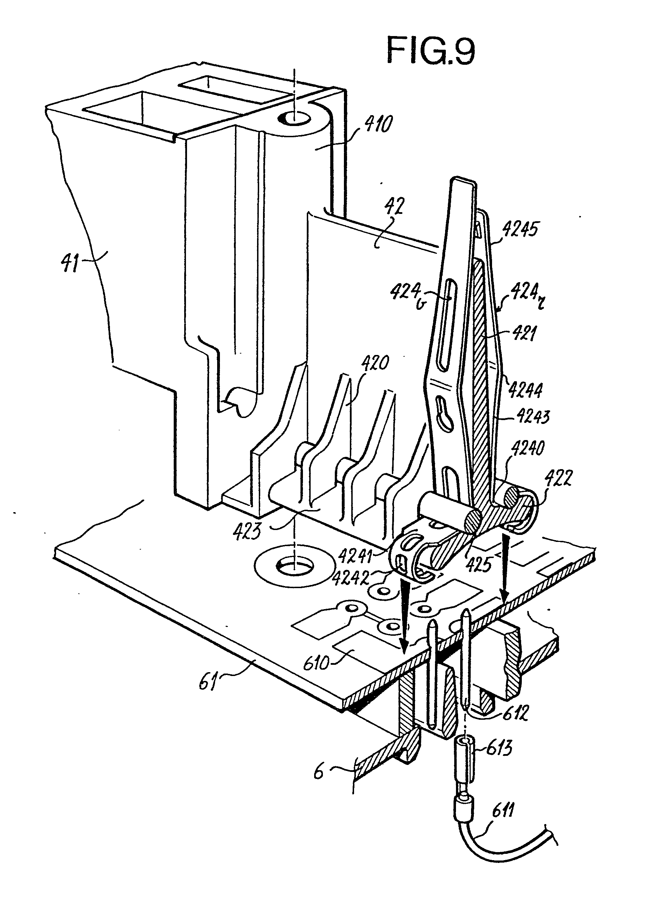

Les Figs. 8 et 9 détaillent le mécanisme de commutation "réseau" qui est supporté par la plaque transversale verticale 42 du bloc 4 et commandé par l'enfoncement d'une touche "réseau" 1. Ce mécanisme de commutation a trait au premier type de pièce tournante intermédiaire, désignée ci-après par volet 426, telle que définie dans l'entrée en matière.

La plaque 42, en forme de T renversé, présente, venues du moulage du bloc 4, des nervures verticales longitudinales 420 qui sont alignées deux à deux sur les faces arrière et avant et qui sont perpendiculaires aux côtés des entailles du T formant la plaque 42. Deux paires de nervures voisines 420 sur les faces arrière et avant forment deux logements 423 dans lesquels sont insérées deux lames conductrices flexibles avant $424_v$ et arrière $424_r$ qui peuvent être connectées ou déconnectées lors de l'enfoncement de la touche 1.

Comme montré à la Fig. 9, une lame 424 présente un profil sensiblement en équerre. Le coin 4240 de l'équerre est maintenu contre l'un des coins T renversé de la plaque 42 par un cylindre plein 425 qui s'enfile à travers le parallélépipède 40 et les coins des nervures 420. La partie inférieure 4241 de la lame 424 épouse la surface supérieure sensiblement convexe de la base 422 de la plaque 42 et est terminée par un crochet semi-circulaire 4242 qui entoure complètement le congé semi-cylindrique extrême de la base 422. Le crochet 4242 est appliqué, sous faible flexion, contre une plage conductrice 610 de la plaque à circuit imprimé 61 qui peut être reliée à un fil conducteur externe 611 à travers, par exemple, un connecteur à fiche traversière et cosse 612, 613. De tels conducteurs externes peuvent être reliés aux fils de ligne du poste téléphonique ou, plus généralement, à des bornes convenables de générateurs de fonction inclus dans un clavier de commutation pour la commande de dispositifs téléinformatiques par exemple. La partie supérieure verticale 4243 d'une lame 424 est nettement plus longue que la partie inférieure 4241. La partie supérieure 4243 est sensiblement coudée en son milieu 4244 afin que sa flexion propre contribue à la poussée de l'extrémité supérieure 4245 vers le pan vertical 421 de la plaque 42.

En se reportant à nouveau à la Fig. 8, les paires de lames 424 sont réparties en deux groupes, par exemple au plus à sept et cinq paires, de part et d'autre d'une paire de nervures repères coplanaires $420_m$, plus longues que les autres 420. Selon la réalisation illustrée, le groupe des lames de droite est commandé par un volet $426_v$, en avant du pan vertical 421, et le groupe des lames de gauche par un volet $426_r$, en arrière du pan 421.

Chaque volet 426 est monté à rotation horizontale, au-dessus des nervures 420, au moyen de deux appendices cylindriques 4260, saillants à sa base,qui sont convenablement logés dans les faces verticales en regard des parallélépipèdes 40 et 41 du bloc 4. Les volets 426, verticaux au repos, sont rappelés à l'opposé des faces du pan vertical 421 par deux ressort hélicoïdaux 4261, monté par exemple autour des appendices de droite 4260 des volets. Chacun des ressorts 4261 a l'un de ses brins qui est appliqué dans une gorge d'un fût creux taraudé 410 du bloc 41, et son autre brin qui est appliqué contre la face du volet en regard de la plaque 42. Le fût 410 prolonge la plaque 42 et sert, conjointement au pivot taraudé 13, à la fixation par vissage du bloc 4 sur le fond du boîtier du poste téléphonique (Fig. 3). Les extrémités de droite des volets $426_v$, $426_r$, côté du parallélépipède 40 de la touche "réseau" 1, comportent également des appendices horizontaux supérieurs $4262_v$, $4262_r$ qui traversent des lumières latérales de la face de gauche du parallélépipède 40 et qui sont appliqués sous la contrainte des ressorts 4261 respectivement sur les faces internes en regard de profilés verticaux avant et arrière, $16_v$ et $16_r$, de la base 10 de la touche 1. Chaque profilé $16_v$, $16_r$ présente une partie supérieure $161_v$, $161_r$ en retrait vers le plan de la plaque 42, par rapport à sa partie inférieure $162_v$, $162_r$. Les extrémités des appendices $4262_v$, $4262_r$ sont terminées par des rondelles montées à force $4263_v$, $4263_r$.Lorsque la touche est au repos, non enfoncée, ces rondelles sont appliquées contre les parties inférieures $162_v$ et $162_r$ sensiblement en dessous de la transition des parties $161_v$ et $162_v$ du profilé avant. Cette transition $161_v$ - $162_v$ est plus basse par rapport à l'autre transition $161_r$ - $162_r$ du profilé arrière $16_r$. L'écart entre ces deux transitions est égal à celui entre les côtés horizontaux de l'entaille saillante 301 du volet de garde 30 et de l'entaille 751 du crochet de verrouillage sous-jacent 75 du râtelier "réseau" 7 (Fig. 4).

Par ailleurs, chaque volet $426_v$, $426_r$ comporte, respectivement à droite et à gauche, une équerre $4264_v$, $4264_r$ dont la partie verticale s'emboîte par encliquetage sur le chant supérieur du volet et dont la partie horizontale surplombe les petites branches 422, respectivement avant et arrière, de la plaque 42, à un niveau au-dessus du pan vertical 421, comme montré à la Fig. 8. La partie horizontale de chaque équerre 4264 comporte une série transversale d'entailles, telles que 4265, sur le bord horizontal, et une série transversale d'orifices, tels que 4266. Une entaille 4265 ou un orifice 4266 coopère avec l'extrémité supérieure 4245 de la plus longue lame d'une paire, telle que $424_v$ montrée à la Fig. 9. L'autre lame plus courte de chaque paire, telle que $424_r$ montrée à la Fig. 9, a sa partie supérieure, contrainte par sa flexion propre, à être appliquée contre ou vers le rebord supérieur du pan vertical 421 de la plaque intermédiaire centrale 42. Lorsque la touche 1 est au repos, la lame longue (avant ou arrière) d'une paire est, soit appliquée contre le pan 421 devant une entaille 4265 d'une équerre 4264, auquel cas, les deux lames de la paire sont en contact électrique, soit retenue par un orifice 4266 d'une équerre 4264, auquel cas, elle n'est pas en contact électrique avec la petite lame correspondante.

Ainsi, il apparaît que :

1) au début de la course d'enfoncement de la touche "réseau" 1, lorsque le téton 15 a passé en dessous de l'entaille saillante 301 du volet de garde 30 et que, simultanément, le volet avant $426_v$ a pivoté vers l'arrière, suite au glissement de la rondelle $4263_v$ de la partie $162_v$ vers la partie $161_v$ du profilé avant $16_v$ de la touche, le volet arrière $426_r$ étant toujours vertical au repos, les grandes lames de contact 424, arrière ou avant, associées à l'équerre avant $4264_v$ sont pour partie poussées vers l'arrière, si la grande lame est disposée en arrière de la plaque 42, ou pour partie contraintes par leur flexion propre vers l'arrière, si la grande lame est disposée en avant de la plaque 42, de manière à se déconnecter pour partie ou à se connecter pour partie aux petites lames respectives opposées avant ou arrière, lorsque la touche est mise ou maintenue en garde, ces dernières déconnexions et/ou connexions étant alors établies ;

2) à la fin de la course d'enfoncement de la touche "réseau" 1, lorsque le téton 15 a passé en dessous du crochet correspondant 75 du râtelier "réseau" 7 et que, simultanément, le volet arrière $426_r$ a pivoté vers l'avant, suite au glissement de la rondelle $4263_r$ de la partie $162_r$ vers la partie $161_r$ du profilé arrière $16_r$ de la touche, le volet avant $426_v$ restant incliné selon l'alinéa précédent, les grandes lames de contact 424, arrière ou avant, associées à l'équerre $4264_r$, sont pour partie poussées vers l'avant, si la grande lame est disposée en avant de la plaque 42, ou pour partie contraintes par leur flexion propre vers l'avant, si la grande lame est disposée en arrière de la plaque 42, de manière à se déconnecter pour partie ou à se connecter pour partie aux petites lames respectives opposées arrière ou avant, lorsque la touche 1 est verrouillée par la retenue du téton 15 dans l'entaille 751 du crochet 75, ces dernières déconnexions et/ou connexions étant maintenues ;

3) selon les longueurs des entailles 4265 et des orifices 4266 de chaque volet suivant la direction de débattement des longues lames de contact, perpendiculaire à la direction d'enfoncement de la touche 1, ces déconnexions et/ou connexions ont lieu simultanément ou après des délais respectifs fonctions de ces longueurs, pendant le glissement de la rondelle 4263 associée au volet sur la transition du profilé correspondant 16.

Il résulte de ce qui précède qu'une touche "réseau" 1 peut commander deux groupes de fonctions respectivement associés à ses positions de garde et de verrouillage et que les commandes des fonctions de chaque groupe sont réparties temporellement au cours de l'enfoncement de la touche.

On notera qu'à la Fig. 8 est représenté un couvercle 427, à section en U, qui recouvre le mécanisme de commutation des lames 424 et qui forme avec les parallélépipède 40 et 41 un parallélépipède allongé transversal 4 interchangeable.

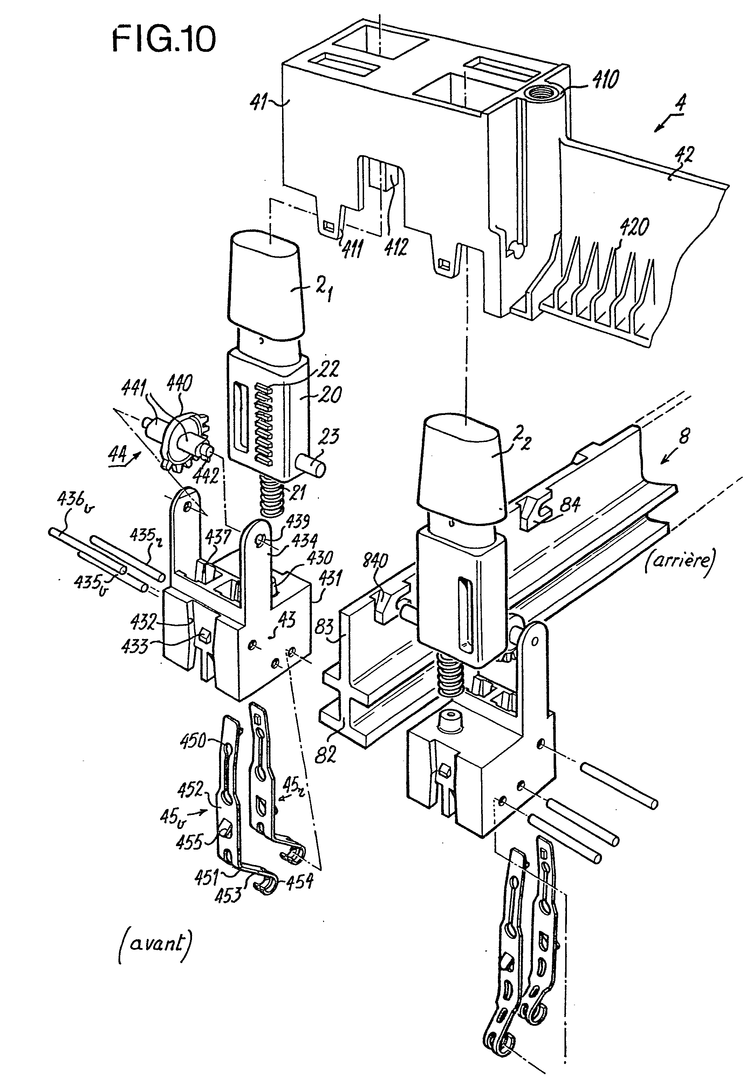

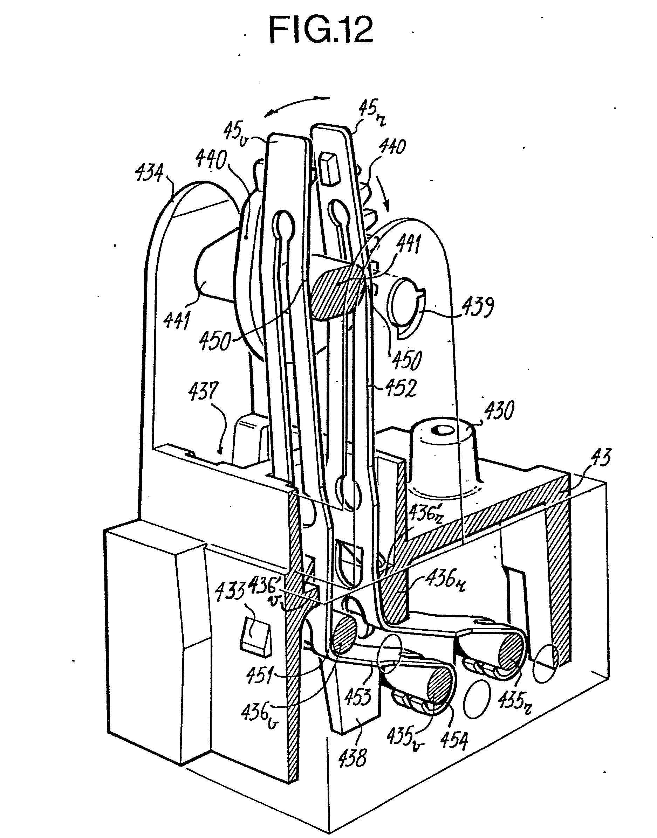

On se reporte maintenant aux Figs. 10 et 12 pour décrire le mécanisme de verrouillage et de commutation commandé par une touche "privé" 2 du bloc de commutation 4. Ce mécanisme a trait au second type de pièce tournante intermédiaire, désigné ci-après par arbre à roue dentée et cames 44, tel que défini dans l'entrée en matière.

Comme déjà dit, le parallélépipède creux 41 d'un bloc 4 contient les mécanismes de verouillage de deux touches "privé" $2_1$ et $2_2$ qui sont disposées symétriquement et en quinconce de part et d'autre du râtelier "privé" 8. Uniquement l'un de ces mécanismes, par exemple celui assigné à la touche de gauche $2_1$, sera décrit en détail.

Une touche "privé" 2 se présente sous la forme d'une base parallélépipédique allongée verticalement 20 qui est capuchonnée par le bloc de préhension de la touche 2, par encliquetage, collage ou analogue. La base 20 de la touche $2_1$, resp. de la touche $2_2$ coulisse verticalement dans une cavité parallélépipédique arrière, resp. avant du bloc 41 et est rappelée vers le haut par un ressort hélicoïdal 21 qui est logé dans un alésage borgne vertical inférieur de la base 20. L'extrémité inférieure du ressort 21 s'appuie sur un picot de centrage 430 d'une assise 43, sous-jacente à la touche. L'assise 43 comporte une embase 431 qui prolonge la partie de gauche, resp. de droite, du parallélépipède creux 41 et dans laquelle sont ménagées deux rainures verticales avant et arrière 432. Deux saillies 433 de ces rainures 432 s'encliquêtent dans deux pattes inférieures percées 411 du bloc 41 lors de l'assemblage. L'embase 431 de l'assise 43 est surmontée par deux branches verticales 434, en avant de la touche $2_1$, resp. en arrière de la touche $2_2$, qui pénètre dans la partie creuse de gauche, resp. de droite du bloc 41.

Entre les branches 434, formant chape, est monté à rotation un petit arbre horizontal transversal 44. Cet arbre 44 comporte, d'une manière unitaire et venues de moulage, en son centre, une roue 440 qui est dentée au moins sur un quart de sa périphérie et, latéralement, deux cames 441 dont les sections sont pratiquement ovales ou elliptiques. L'axe de symétrie d'une came peut être prévu incliné par rapport à l'axe de l'autre came, selon certaines applications, afin de différencier temporellement les connexions et déconnexions. Les dents de la roue 440 sont destinées à coopérer avec une crémaillère verticale 22, dont les dents sont saillantes sur la face avant de la touche $2_1$, resp. arrière de la touche $2_2$.

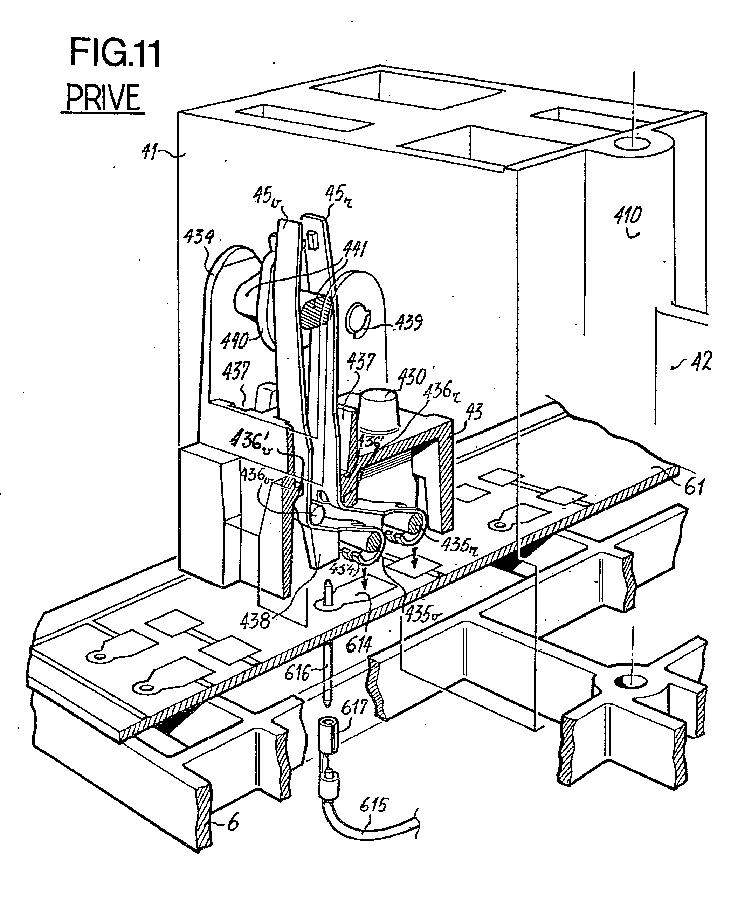

Chaque came 441 est entretoisée par de sensibles coudes 450 de deux lames flexibles conductrices, dites avant $45_v$ et arrière $45_r$. Seule la paire de lames de droite $45_v$, $45_r$ associée à la touche de gauche $2_1$ a été représentée sur les Figs. 10 à 12. Chaque lame $45_v$, $45_r$ est

pliée à environ 110° et présente de part et d'autre de cette pliure 451 un grand bras 452, pratiquement vertical, et un petit bras 453, sensiblement à 20° en dessous de l'horizontale. Chaque paire de lames $45_v$, $45_r$ traverse un orifice supérieure 437 de l'assise 45 (Fig. 11), à l'aplomb de la came correspondante 441. Une lame est maintenue en trois points d'application fixes qui sont, à partir du bas :

- un axe inférieur horizontal $435_v$, $445_r$ traversant la cavité ouverte par le bas de l'assise 43 et coulissant dans celle-ci lors de l'assemblage, qui est entouré (en arrière pour la touche $2_1$ ou en avant pour la touche $2_2$) par l'extrémité en crochet semi-circulaire 454 du petit bras 453 ; les petits bras 453 d'une paire de lames $45_v$, $45_r$ sont séparés d'une paire voisine par une cloison verticale 438 (Figs. 11 et 12) à l'intérieur de l'assise 43 ;

- un axe supérieur horizontal $436_v$, resp. une saillie $436_r$, transversal à la cavité de l'assise 43 par rapport à l'axe $435_v$, $435_r$ (au-dessus et en avant pour la touche $2_1$ ou au-dessous et en arrière pour la touche $2_2$), qui est entouré (en avant pour la touche $2_1$ ou en arrière pour la touche $2_2$) par la pliure 451 ; et

- une saillie $436'_v$, respectivement $436'_r$, dans l'orifice 437 qui est au-dessus et en arrière de l'axe $436_v$, resp. en avant de la saillie $436_r$ ; les saillies $436'_v$ et $436'_r$ sont pratiquement en dessous de la came correspondante 441 afin que les flexions propres vers l'arrière de la lame $45_v$ et vers l'avant de la lame $45_r$ permettent leurs applications par l'avant et par l'arrière sur la came 441.

Une languette saillante 455 du grand bras 452 de la lame $45_v$, $45_r$ respectivement en avant et en arrière, obtenue par découpage, est appliquée contre la face horizontale de la saillie $436'_v$, $436'_r$ afin d'empêcher toute descente de la lame lors du montage. En effet, les lames $45_v$ et $45_r$ sont d'abord encastrées par le bas dans l'orifice 437 jusqu'à extension des languettes 455 sur les saillies 435', puis les axes $435_r$, $436_v$ et $435_v$ sont enfilés suivant cet ordre.

Comme montré à la Fig. 11, chaque crochet inférieur 454 d'une lame 45 est sensiblement fléchi et au contact d'une plage de connexion 614 du circuit imprimé de la plaque 61, laquelle plage pouvant être reliée à un fil conducteur à fiche traversière et cosse, 616 et 617. Les paires de lames $45_v$, $45_r$ associées à une touche peuvent former le ou les commutateurs qui sont destinés à sélectionner un poste local de l'installation d'intercommunication de l'abonné, ou plus généralement, qui sont destinés à sélectionner certaines fonctions auxiliaires après mise en garde d'une ligne "réseau" ou indépendamment de toutes communications téléphoniques, notamment pour un clavier de commutation.

Selon la variante illustrée relative à un poste d'intercommunication (Fig. 10), la base 20 de chaque touche "privé" 2 est pourvue d'un téton latéral 23 qui coopère avec un crochet 84 saillant latéralement sur la nervure longitudinale 83 du râtelier "privé" 8. La nervure 83 comporte, dans le cas présent, dix crochets répartis en quinconce, à raison de cinq pour chaque colonne de touches "privé" 2. Le téton 23 est guidé dans une rainure (non visible sur les figures) ouverte par le bas de la cavité du bloc 41, dans laquelle coulisse la base 20 de la touche. Le téton 23 émerge latéralement de cette cavité sous un pont médian longitudinal 412. Le pont 412 relie les deux blocs contenant les mécanismes de commutation des deux touches $2_1$ et $2_2$ et permet la libre translation de la nervure ou pan vertical longitudinal 83 du râtelier 8.

Lorsque la touche $2_1$ est au repos, le téton 23 est en butée contre l'extrémité supérieure de la rainure ouverte précitée, sous l'action du ressort de rappel 21. Dès que le combiné est décroché, le crochet de verrouillage correspondant 84 est positionné en dessous du téton 23, par translation vers l'avant du râtelier 8 sous la contrainte du ressort 50 et par butée en fin de course avant de la semelle 82 contre la face arrière de la chape avant $80_v$ (Fig. 2A). L'enfoncement de la touche $2_1$ jusqu'à ce que le téton 23 soit en dessous du crochet 84, après poussée ver l'arrière de son pan coupé 840, puis rappel vers l'avant par le ressort 50, verrouille la touche $2_1$ et déverrouille éventuellement une touche 1 pour la mettre en garde, ou une touche "privé" pour la rappeler au repos. La fin de course descendante de la touche $2_1$ est définie par butée de sa base 20 contre la face supérieure de l'assise 43 et/ou par un ergot 442 à l'extrémité de l'arbre à came et roue dentée 44 qui balaie un secteur 439 de l'une des branches 434 de l'assise 43, plus petit ou égal à celui du secteur denté de la roue 440 (Fig. 12). La descente de la crémaillère de la touche $2_1$ entraîne la rotation de la roue dentée 440 et celle des cames 441. Selon le profil de chaque came, les lames conductrices flexibles $45_v$, $45_r$ d'une paire peuvent subir une ou plusieurs connexions et déconnexions au cours de l'enfoncement de la touche.

Par exemple, pour des cames à section elliptique, l'une des cames a, en position de repos de la touche $2_1$, son grand axe sensiblement incliné par rapport à la verticale afin que les extrémités des longs bras 452 des lames 45 associées soient écartées d'une faible distance, et l'autre came a son grand axe nettement plus incliné par rapport à la verticale afin que les extrémités des longs bras 452 des lames 45 associées soient écartées d'une distance plus grande que la précédente. Au début de la descente de la touche $2_1$, dès que le grand axe de la première came précitée est vertical, les deux lames associées 45 viennent en contact électrique, tandis que les deux autres lames se sont rapprochées. Puis, en fin de course de la touche $2_1$, le grand axe de la première came est alors symétrique de sa position initiale par rapport à la verticale et déconnecte les deux lames associées, tandis que le grand axe de la seconde came précitée est maintenant vertical pour connecter les extrémités des longs bras 452 des lames associées. Ces déconnexions et connexions précédentes sont alors maintenues par verrouillage du téton 23 de la touche $2_1$ sous le crochet 84 du râtelier "privé" 8. Selon cet exemple, au cours de la descente de la touche, les lames de la première paire ont subi une connexion brève, tandis que les lames de la seconde paire sont connectées uniquement en fin de course. Bien entendu, d'autres répartitions temporelles des connexions et déconnexions des paires de lames peuvent être prévues en fonction du profil des cames 441, et plus de deux cames, chacune associée à une ou plusieurs paires de lames conductrices flexibles 45, peuvent être également prévues. Par ailleurs, on notera que, pour un même ensemble d'arbre 44 et de crémaillère 22 de touche, ces répartitions temporelles peuvent être modifiées en assemblant la crémaillère 22 et la roue dentée 440 à des hauteurs relatives sélectionnées de sorte que, au repos, les cames soient à des positions adéquates en fonction des commutations à réaliser.

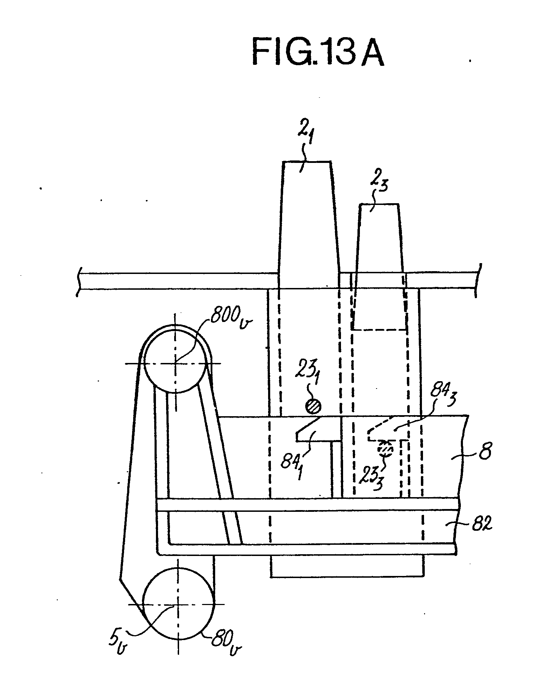

En se référant maintenant aux Figs. 13A à 13C, le verrouillage d'une touche "privé" $2_1$ est décrit lorsque, par exemple, après décrochage, une autre touche "privé" $2_3$ est verrouillée par retenue de son téton $23_3$ au moyen du crochet correspondant $84_3$ du râtelier "privé" 8, comme montré à la Fig. 13C.

Lorsque la touche $2_1$ est enfoncée, le téton $23_1$ glisse sur le

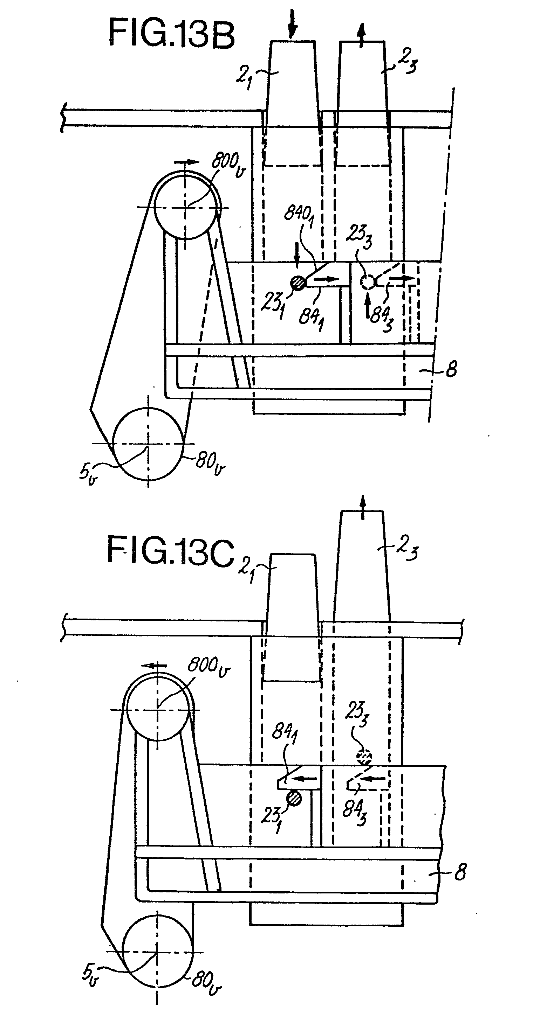

pan coupé $840_1$ du crochet $84_1$ qui est chassé vers l'arrière à l'opposé de la force exercée par le ressort 50, la course arrière des râteliers 7 et 8 étant limitée, comme déjà dit, par la butée d'inertie 910 de la pédale 9 (Fig. 2A et 7A). Comme montré à la Fig. 13B, le téton $84_3$ d'une touche "privé" initialement verrouillée, telle que $1_3$, est dégagée de son crochet $84_3$ pour remonter en position de repos sous l'action du ressort de rappel 21 de la touche $1_3$. Puis, le râtelier 8 revient vers l'avant sous l'action du ressort de rappel 50 des râteliers, afin que le crochet $84_1$ passe au-dessus du téton $23_1$ et verrouille la touche $2_1$, comme montré à la Fig. 13C.

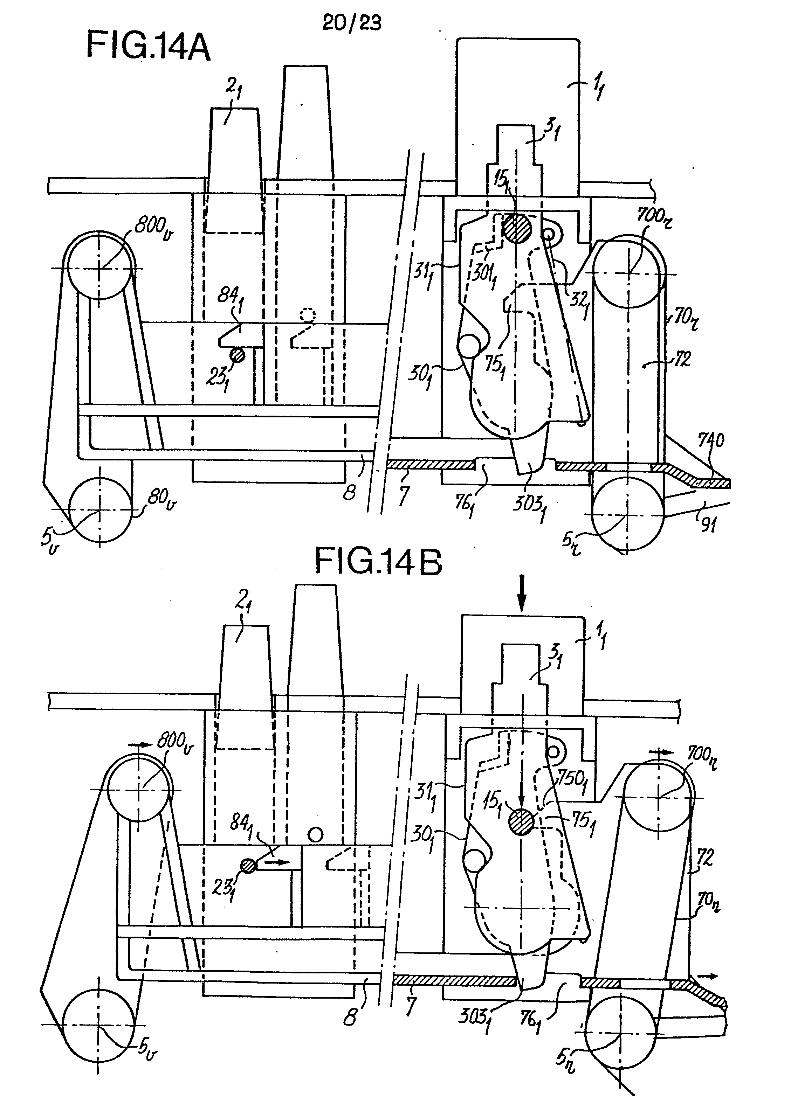

Les Figs. 14A à 14C illustrent le déverrouillage d'une touche "privé" $2_1$ par l'enfoncement d'une touche "réseau" $1_1$. Initialement, comme montré à la Fig. 14A, la touche "privé" $2_1$ est en position verrouillage, son téton $23_1$ étant retenu par le crochet $84_1$ du râtelier "privé" 8, et la touche "réseau" $1_1$ est au repos, son téton $15_1$ retenant l'entaille $301_1$ du cliquet de garde $30_1$, rappelé par le ressort $32_1$.

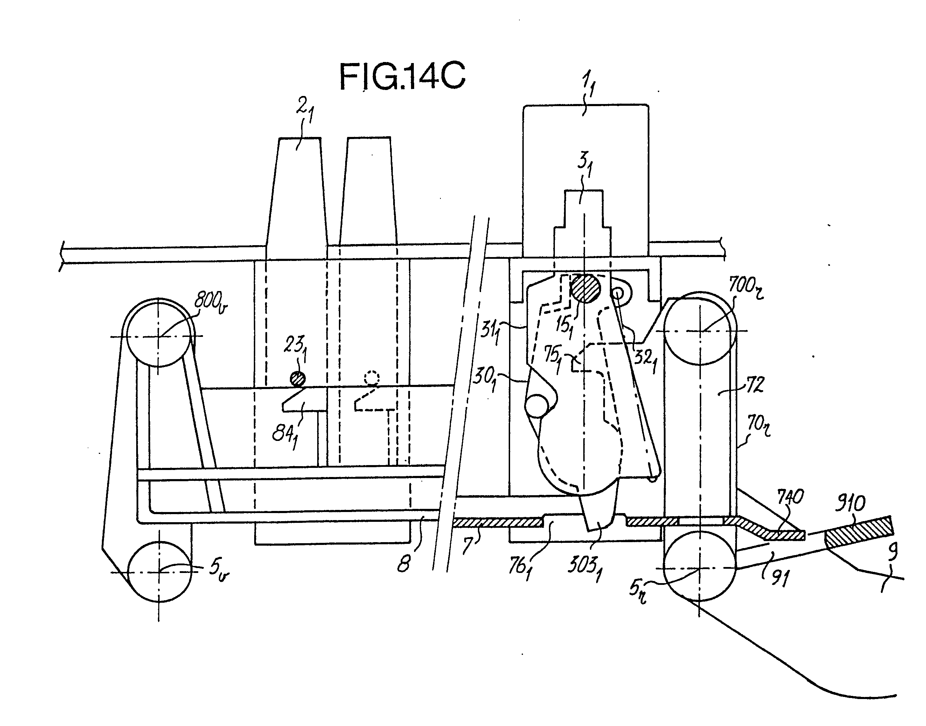

L'enfoncement de la touche "réseau" $1_1$ conduit à la poussée vers l'arrière des râteliers 7 et 8, c'est-à-dire de l'ensemble des parallélogrammes déformables du mécanisme de verrouillage, par poussée du téton $15_1$ contre le pan coupé $750_1$ du crochet $75_1$ du râtelier "réseau" 7 (Fig. 14B). A cet instant, le crochet $84_1$ du râtelier "privé" 8 est dégagé du téton $23_1$ de la touche "privé" $2_1$ qui remonte en position de repos (Fig. 14C). La touche "réseau" $1_1$ peut continuer sa descente pour être verrouillée par le crochet $75_1$ ou être relâchée en position de repos (Fig. 14C).

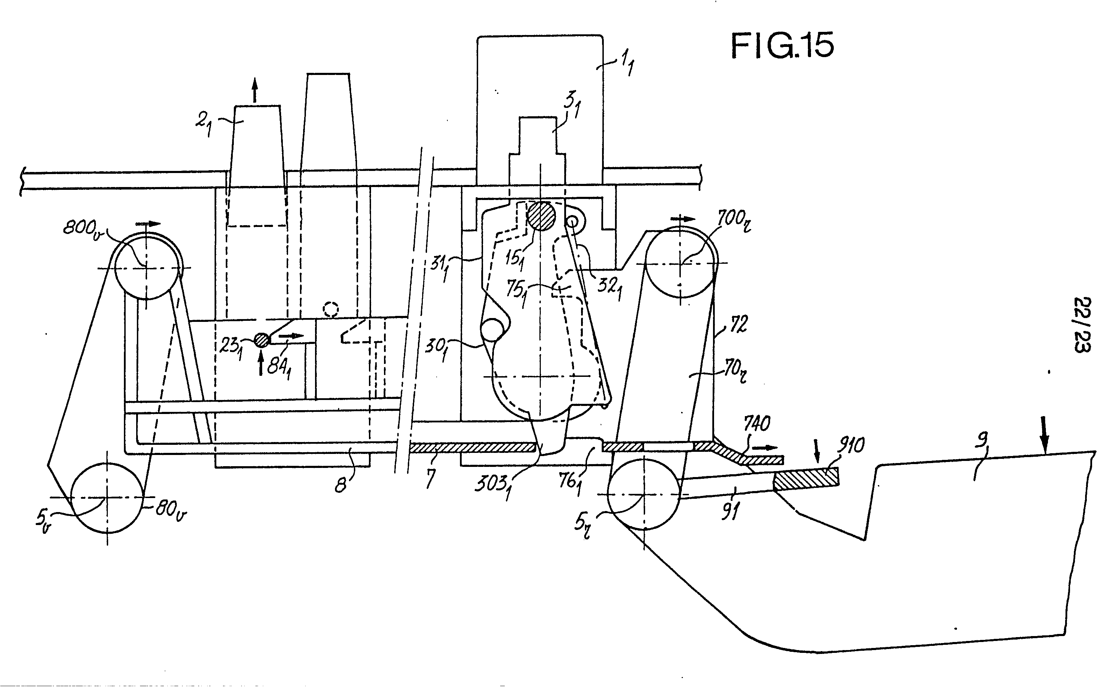

Une seconde possibilité du déverrouillage de la touche "privé" $2_1$, en position verrouillage telle que montrée à la Fig. 14A, est l'action sur la pédale 9, comme illustré à la Fig. 15. Par exemple, en reposant le combiné dans son logement, l'extrémité de droite 910 de la semelle 91 de la pédale descend pour dégager l'extrémité arrière 740 du râtelier "réseau" 7. Les râteliers 7 et 8 sont alors chassés vers l'arrière, à l'encontre des ressorts 50 et 94, par la poussée du levier 92 de la pédale contre le tourillon $700_r$, ce qui provoque le pivotement des chapes 70 et 80 vers l'arrière autour des axes 5. Ceci conduit du dégagement du crochet $84_1$ par rapport au téton $23_1$ de la touche "privé" $2_1$, qui remonte en position de repos. Comme déjà dit, en position de raccrochage, les râteliers 7 et 8 sont, sous la contrainte des ressorts 50 et 94, en butée vers l'avant, grâce à la retenue du tourillon $700_r$ par le levier 92 de la pédale 9 ayant pivoté vers l'arrière autour de l'axe $5_r$. En cette position de déverrouillage, les tétons 15 des touches "réseau" 1 aussi bien que les tétons 23 des touches "privé" 2 peuvent descendre librement à fond, devant les crochets 75, 84 des râteliers 7, 8, respectivement.

Enfin, on notera que tous les éléments constituant les mécanismes de commutation à lames des touches "privé" $2_1$ et $2_2$ et d'une touche "réseau" peuvent être assemblés par automate, de sorte que le bloc interchangeable 4, propre à l'emploi, peut être monté, par vissage en 13 et 410 (Fig. 3), sur la plaque à circuit imprimé 61, sans autre réglage et modification dans le poste téléphonique.

Par ailleurs, bien que l'invention ait été décrite en référence à un poste d'intercommunication téléphonique, différentes variantes de montage peuvent être facilement imaginables par l'homme de métier dans le cadre des revendications annexées, en ce qui concerne chaque bloc de commutation 41 ou chaque ensemble de bloc de commutation 40 et de plaque 42 associé à une touche pour un clavier de commutation autre que téléphonique.

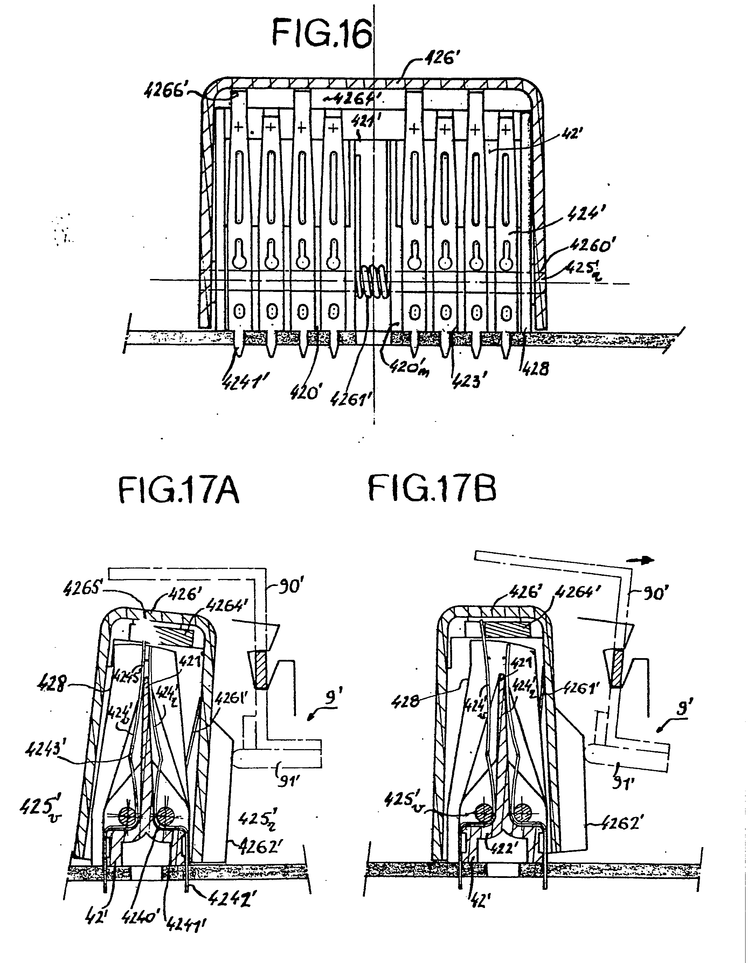

Ainsi, pour un poste téléphonique dit simple appel, c'est-à-dire ne comprenant ni touches "privé" ni touches "réseau", mais seulement un mécanisme de commutation "réseau" directement commandé par la pédale du poste, un jeu de paires de lames flexibles conductrices, analogues à celles décrites en référence aux Figs. 8 et 9, peut être prévu. Cette variante est décrite ci-après en se reportant aux Figs. 16, 17A et 17B.

On y retrouve des paires de lames flexibles conductrices 424', ici au nombre de huit. Chaque lame 424' présente une pliure 4240', sensiblement inférieure à 90°, qui la partage en un petit bras horizontal 4241' et un grand bras 4243', sensiblement coudé et vertical, propre à coopérer avec l'autre grand bras vertical de l'autre lame en vis-à-vis. Comme précisé pour les lames 424 montrées à la Fig. 9, chaque paire de lames avant $424'_v$ et arrière $424'_r$ est encastrée dans une paire de logements 423' entre deux paires de nervures 420' d'une plaque verticale à profil en T renversé 42'. La base 422' de la plaque 42' est fixée par vissage ou analogue sur le fond du boîtier du poste pouvant supporter un circuit imprimé. Les pliures 4240' des lames 424' sont

plaquées contre les coins de la plaque 42' au moyen d'axes avant $425'_v$ et arrière $425'_r$ qui s'enfilent à travers les nervures 420' et les côtés 428 de la plaque 42'. Les côtés 428 sont pratiquement à section longitudinale trapézoïdale et sont perpendiculaires au pan vertical 421'. Selon la variante illustrée, les extrémités inférieures 4242' des petits bras 4241' des lames qui sont pliés à 90°, se terminent en forme de tiges pour s'enficher dans des cosses de conducteurs, comme les fiches 612 montrées à la Fig. 9.

Chaque paire de lames $424'_v$ et $424'_r$ est constituée par une lame à long bras plus grand que celui de l'autre lame. L'extrémité 4245' du bras 4243' de la petite lame (arrière ou avant), telle que $424'_r$ montrée aux Figs. 17A et 17B, est toujours contrainte par sa flexion propre à s'appliquer contre le pan vertical 421' de la plaque 42'. L'extrémité 4245' du bras 4243' d'une grande lame (avant ou arrière), telle que $424'_v$ montrée aux Figs. 17A et 17B, coopère avec l'extrémité du long bras de l'autre lame et également avec une plaque 4264' solidaire du fond d'un couvercle 426'.

L'ensemble 426' et 4264' joue un rôle analogue à un volet 426 et une équerre 4264 montrés à la Fig. 8. Le couvercle 426' est parallélépipédique, recouvre totalement la plaque 42' et est solidaire de celle-ci. Deux orifices 4260' sont pratiqués dans les petits côtés verticaux longitudinaux du couvercle 426' et reçoivent les extrémités de l'axe avant $425'_v$. Un ressort de rappel hélicoïdal 4261' est centré sur l'axe arrière $425'_r$ entre deux nervures centrales $420'_m$. L'un des brins du ressort 4261' est appliqué contre la face arrière du pan vertical 421' de la plaque 42' (Fig. 16) et l'autre brin est appliqué contre la face interne du côté arrière transversal du couvercle 426' (Figs. 17A et 17B). Ainsi, le couvercle 426' est monté à pivotement autour de l'axe avant $425'_v$ et est rappelé vers l'arrière sous la contrainte du ressort 4261', par mise en butée de son coin supérieur interne avant contre les bords supérieurs avant des côtés 428 de la plaque 42' et/ou par mise en butée de son rebord inférieur interne arrière contre le côté arrière inférieur de la plaque 42' (Fig. 17A).

La plaque 4264' est rapportée contre le fond du couvercle 426'. Elle comporte des entailles 4265' sur son bord avant et des orifices 4266' qui sont analoques à ceux d'une équerre 4264. Chaque entaille 4265' coopère de préférence avec une grande lame 424' qui est positionnée à l'avant du pan 421' et qui, au repos (Fig. 17A), est au contact de la petite lame associée. Chaque orifice 4266' coopère de préférence avec une grande lame 424' qui est positionnée à l'arrière du pan 421' et qui, au repos, est retenue par l'orifice 4266' pour être déconnectée de la petite lame associée.

A l'arrière, le couvercle 426' est muni d'une nervure médiane verticale 4262' qui est poussée vers l'avant lors du décrochage. A cet égard, on a représenté schématiquement, en traits mixtes, aux Figs. 17A et 17B une pédale classique 9' munie d'une semelle 91', pratiquement horizontale, qui coopère avec la nervure 4262'. Le bras 90', pratiquement vertical, de la pédale 9' pivote dans un logement du boîtier (représenté en trait plein) et est rappelé vers l'arrière par un ressort (non représenté) jouant un rôle analogue à celui 94 de la pédale 9 montrée aux Figs. 2A et 2B.

Lorsque le combiné (non représenté) est raccroché comme montré à la Fig. 17A, le bras 90' pivote vers l'avant sous le poids du microphone,et la semelle 91' de la pédale pivote vers l'arrière afin que le couvercle 426' soit maintenu incliné et en butée contre la plaque 42' sous l'action du ressort 4261'. Dès le décrochage du combiné, le bras 90' de la pédale pivote vers l'arrière sous l'action de son ressort de rappel, et le pivotement de la semelle 91' pousse vers l'avant la nervure 4262'. Le couvercle 426' pivote autour de l'axe $425'_{V}$, à l'encontre du ressort 4261', et a son coin supérieur interne arrière butant contre les bords supérieurs arrière des côtés 428 de la plaque 42' et/ou son rebord inférieur interne avant butant contre le côté avant inférieur de la plaque 42'. Le couvercle est pratiquement vertical comme montré à la Fig. 17B. Simultanément, le pivotement de la plaque 4264' entraîne vers l'avant, par simple poussée, les grandes lames avant 424, coopérant de préférence avec une entaille 4265', pour leurs déconnexions avec des petites lames arrière, et contribue à l'application contre le pan 421', par flexion propre, des grandes lames arrière 424, coopérant de préférence avec un orifice 4266', pour leurs connexions avec des petites lames avant.

On notera que, selon cette dernière variante (Figs. 16, 17A et 17B), la plaque 42' et l'ensemble couvercle et plaque 426' et 4264' peuvent être également en matière plastique et que tous les éléments contenus dans le couvercle 426' peuvent être assemblés par des automates et former un ensemble interchangeable.

Revendications

1 - Clavier de commutation dans lequel chaque touche (1 ; 2) est rappelée par ressort (12 ; 21) et présente au moins une face latérale profilée (16 ; 20) qui coopère avec une paire de lames de contact flexibles (424 ; 45), à débattement perpendiculaire à la face profilée, par l'intermédiaire d'une pièce (426 ; 44) qui est montée tournante perpendiculaire aux directions de déplacement de la touche et de débattement des lames et dont une première partie (4262 ; 440) est toujours en contact avec la face profilée (16 ; 20) par roulement ou glissement sur celle-ci, caractérisé en ce que plusieurs paires de lames de contact flexibles (424 ; 45) coopèrent avec la face latérale profilée (16 ; 20) de chaque touche par l'intermédiaire de ladite pièce tournante (426 ; 44) et sont justaposées longitudinalement le long de l'axe de rotation de la pièce tournante associée (426 ; 44) et en ce que la pièce tournante (426 ; 44) tourne autour d'un axe de rotation fixe (4260 ; 442) et comporte plusieurs secondes parties (4265, 4266 ; 441) contre chacune desquelles est appliquée au moins l'une des lames d'une paire (424 ; 45) et dont au moins deux ont des sections transversales à l'axe de rotation fixe différentes afin que les lames des deux paires associées à ces deux secondes parties (4265, 4266 ; 441) à sections transversales différentes soient respectivement connectées et/ou déconnectées simultanément ou successivement.

2 - Clavier conforme à la revendication 1, caractérisé en ce que la première partie (4262) de la pièce intermédiaire tournante (426) d'au moins une touche (1) est appliquée par un ressort (4261) contre la face latérale profilée (16) de la touche (1) qui est interne ou externe au corps (10) de la touche et qui présente au moins une transition (161, 162) pour la rotation de la pièce tournante (426) et en ce que l'une des lames d'une paire ($424_v$, $424_r$) associée à la touche (1) est, par sa propre flexion, appliquée contre une seconde partie correspondante de la pièce tournante (426) et déconnectée de l'autre lame, ou appliquée contre une plaque fixe (42) et connectée à l'autre lame, lorsque la touche (1) est au repos, et appliquée contre la plaque fixe (42) et connectée à l'autre lame ou appliquée contre une seconde partie correspondante de la pièce tournante (426) et déconnectée de l'autre lame, lorsque la pièce intermédiaire tournante (426) a tourné par passage de la première partie (4262) sur la transition (161, 162), tandis que l'autre lame est appliquée contre la plaque fixe (42).

3 - Clavier conforme à la revendication 1 ou 2, caractérisé en ce que les secondes parties de la pièce tournante (426) sont des orifices (4266) et/ou des entailles (4265) pratiqués dans celle-ci.

4 - Clavier conforme à la revendication 2 ou 3, caractérisé en ce que les distances des points d'application (4265, 4266) des lames ($424_v$, Fig. 8) coopérant avec la pièce tournante (426) par rapport à un plan fixe passant par l'axe de rotation de la pièce tournante sont différentes.

5 - Clavier conforme à l'une des revendications 2 à 4, caractérisé en ce qu'il comprend au moins une seconde pièce tournante analogue à celle conforme à l'une des revendications 2 à 4, dont la seconde partie (4262) coopère avec une transition (161, 162) de la face profilée (16), ou d'une autre face profilée de la touche (1), qui est à un niveau différent de celui de la première transition et en ce que la seconde pièce tournante commande les connexions et/ou déconnexions de secondes paires de lames de contact (424).

6 - Clavier conforme à l'une des revendications 2 à 5, caractérisé en ce que chaque lame de contact d'une paire ($424_v$, $424_r$) se présente sous la forme d'une équerre ayant un premier côté (4243) qui tend, par sa flexion propre, à s'appliquer vers la plaque fixe (42), un second côté (4241) épousant la forme de la base en T (422) de la plaque (42), et une pliure (4240) appliquée contre un coin T de la plaque (42) par un élément cylindrique amovible (425).

7 - Clavier conforme à la revendication 6, caractérisé en ce qu'un élément cylindrique (425) est commun pour partie à des lames s'appliquant en permanence sur la plaque (42) et pour partie à des lames coopérant avec une pièce tournante ou plusieurs pièces tournantes (426).

8 - Clavier conforme à la revendication 6 ou 7, caractérisé en ce qu'un élément cylindrique ($425'_v$, Fig. 17A) constitue l'axe de pivotement d'une pièce tournante (426').

9 - Clavier conforme à l'une des revendications 6 à 8 caractérisé en ce que le second côté (4241) d'une lame (424) est terminé par un crochet semi-circulaire (4242) appliqué contre une plaque à circuit imprimé (61).

10 - Clavier conforme à l'une des revendications 6 à 8, caractérisé en ce qu'au moins les pliures (4240) des lames (424) sont logées entre des nervures (420) de la plaque fixe (42).

11 - Clavier conforme à l'une des revendications 1 à 10, caractérisé en ce que la pièce intermédiaire tournante d'au moins une touche (2) est constituée par un arbre (44) tournant perpendiculairement aux directions de déplacement de la touche (2) et de débattement des lames (45), ayant une ou plusieurs cames (441), en tant que secondes parties, et une roue dentée (440), en tant que première partie, coopérant avec une crémaillère (22) formant la face profilée de la touche (2), et en ce que les lames d'une paire ($45_v$, $45_r$) associées à la touche (2) sont, par leurs propres flexions, appliquées de part et d'autre et contre une came (441).

12 - Clavier conforme à la revendication 11, caractérisé en ce que la section des cames (441) est elliptique et l'axe d'au moins une came a une orientation différente de celle d'un axe d'une autre came.

13 - Clavier conforme à la revendication 11 ou 12, caractérisé en ce que la section et l'orientation d'au moins une came (44) sont telles que, au cours de la course de la touche associée (2) les lames de la paire associée ($45_v$, $45_r$) sont d'abord connectées puis déconnectées, ou inversement.

14 - Clavier conforme à l'une des revendications 11 à 13, caractérisé en ce que la section et l'orientation d'au moins une came (441) sont telles que, au cours de la course de la touche associée (2), les lames d'une paire associée ($45_v$, $45_r$) subissent au moins une connexion, une déconnexion et une connexion ou au moins une déconnexion, une connexion et une déconnexion.

15 - Clavier conforme à l'une des revendications 11 à 14, caractérisé en ce que chaque lame (45) d'une paire présente une pliure (451) sensiblement supérieur à 90°, intérieurement contre un premier point d'application (436) et, de part et d'autre de cette pliure (451), un premier bras (452) qui a un coude (450) appliqué contre la came (411) par un second point d'application (436'), une saillie (455) intermédiaire entre la pliure et le coude, appliquée sur le second point d'application à l'opposé du premier point d'application (436) et une extrémité prolongeant le coude (450) pour coopérer avec celle de l'autre lame de ladite paire, et un second bras (453) terminé en crochet (454) entourant un troisième point d'application (435) et appliqué contre une plaque à circuit imprimé (61).

16 - Clavier conforme à l'une des revendications 11 à 15, caractérisé en ce que les paires de lames de contact (45) et l'arbre à roue dentée et came (44) d'une touche associée (2) sont respectivement logées et monté tournant dans une assise (43) qui est encastrée sous-jacente à la touche (2) dans un bloc interchangeable (41) servant à guider la touche.

17 - Clavier conforme aux revendications 15 et 16, caractérisé en ce que le premier (436) et/ou le troisième (435) point d'application d'une lame (45) est constitué par un cylindre commun aux autres lames (45) appliquées d'un même côté contre l'arbre à came (44) et solidaire de ladite assise (43).

18 - Utilisation de clavier de commutation conforme à l'une des revendications 1 à 17 pour un poste téléphonique d'intercommunication comprenant une pluralité de touches réseau (1) associées chacune à un bouton de garde (3) dont l'enfoncement permet le pivotement d'un cliquet de garde (30) rappelé par un ressort (32) lorsqu'une butée (301) dudit cliquet retient un téton (15) de la touche réseau (1) afin de maintenir, à l'encontre d'un ressort de rappel (12) à la position de repos, la touche réseau en position de garde, des moyens mécaniques du genre râtelier dit réseau (7) muni de crochets (75) pour retenir chacun, en position de verrouillage, le téton (15) d'une touche réseau enfoncée (1), après translation du râtelier réseau par décrochage du combiné (C) du poste, et muni également de lumières (76) qui retiennent l'extrémité inférieure (303) des cliquets de garde (30) lorsque le combiné (C) est raccroché afin que les butées (301) des cliquets soient dégagées de la course des tétons (15) des touches réseau, des paires de lames de contact flexibles (424) commandées par les touches réseau (1), une pluralité de touches privé (2), chacune rappelée par un ressort (21) et munie d'un téton (23), des seconds moyens mécaniques du genre râtelier dit privé (8) solidaire en translation du râtelier réseau (7), lesdits râteliers étant rappelés par un ressort (50) dont la contrainte s'additionne à celle du ressort de rappel (94) de la pédale (9) du combiné (C), ledit râtelier privé étant muni de crochets (84) pour retenir chacun, en position de verrouillage, le téton (23) d'une touche privé enfoncée (2), après translation des râteliers (7, 8) par décrochage du combiné (C), et des paires de lames de contact flexibles (45) commandées par les touches privé (2), caractérisée en ce que chaque touche réseau (1) présente au moins une face latérale profilée (16) qui coopère avec plusieurs paires de lames de contact (424) par l'intermédiaire d'au moins une pièce tournante (426) conformément à l'une des revendications 1 à 10 et en ce que chaque touche privé (2) présente au moins une face latérale profilée (22) qui coopère avec plusieurs paires de lames de contact (45) par l'intermédiaire d'au moins une pièce tournante (44) conformément à l'une des revendications 1 et 11 à 17.

19 - Utilisation conforme à la revendication 18, caractérisée en ce que, lorsqu'une touche réseau (1) commande le pivotement de première et seconde pièces tournantes, la différence de niveau entre les deux transitions ($161_v$ -$162_v$, $161_r$-$162_r$) de la ou des faces profilées (16) de la touche réseau est égale à la différence de niveau entre les positions de garde et de verrouillage du téton (15) de la touche réseau (1), l'une ($161_v$ - $162_v$) des transitions faisant pivoter l'une ($426_v$) des pièces tournantes lors du passage en position de garde, et l'autre transition ($161_r$ - $162_r$) faisant pivoter l'autre pièce tournante ($416_r$) lors du passage en position de verrouillage.

20 - Utilisation conforme à la revendication 18 ou 19, caractérisée en ce que le bouton de garde (3) et le crochet de garde (30) d'une touche réseau (1) sont montés latéralement à un bloc interchangeable (40) servant de guidage de la touche réseau (1) et sont disposés à l'opposé de la plaque fixe (42) qui supporte les lames de contact (424) et la ou les pièces tournantes (426) associées à la touche réseau (1) et qui est directement issue du moulage du bloc (40).

21 - Utilisation conforme aux revendications 18 et 20, caractérisée en ce que les blocs de guidage (40, 41) d'une touche réseau (1) et d'une ou deux touches privé (2) sont disposés de part et d'autre de la plaque (42) supportant les lames de contact (424) et la ou les pièces tournantes (426) associées à la touche réseau (1) et forment avec cette plaque (42) un monobloc interchangeable (4) directement venu de moulage.

22 - Utilisation conforme à la revendication 21, caractérisée en ce qu'un bloc (41) ayant deux touches privé ($2_1$, $2_2$) comporte un pont (412) reliant les deux blocs de guidage des touches privé dans lesquels sont encastrées les assises (43) supportant les pièces tournantes à arbre à came et roue dentée (44) et en ce que les crochets de verrouillage (84) du râtelier privé (8) sont répartis latéralement par moitié, de part et d'autre d'une nervure centrale (84) du râtelier (8), dont la semelle (82) coulisse entre les assises (43) des paires de touches privé ($2_1$, $2_2$), sous les ponts (412).

23 - Utilisation conforme à la revendication 21 ou 22, caractérisée en ce que les lames de contact (424 ; 45) et les pièces tournantes (426 ; 44) associées à une touche réseau (1) et à une ou deux touches privé (2) sont supportées par ledit monobloc (4) pour former un ensemble interchangeable.

24 - Utilisation conforme à l'une des revendications 18 à 23, caractérisée en ce que la pédale (9) du combiné (C) du poste téléphonique présente une partie (910) qui sert de butée d'inertie des râteliers (7, 8), après décrochage du combiné, lors du verrouillage d'une touche (1, 2) par un crochet (75, 84) de l'un des râteliers, et qui est escamotable de la course des râteliers (7, 8) lors du raccrochage du combiné (C).

25 - Utilisation conforme à la revendication 24, caractérisée en ce que la partie (910) servant de butée d'inertie est dans le prolongement du râtelier réseau (7) après le décrochage.

26 - Utilisation conforme à l'une des revendications 18 à 25, caractérisée en ce que la base (31) d'un bouton de garde (3) comporte une butée d'inertie (314) du cliquet de garde associé (30) lors du pivotement de ce dernier par verrouillage de la touche réseau associée (1).

27 - Utilisation conforme à l'une des revendications 18 à 26 pour laquelle la pédale 9 du poste téléphonique comporte une partie (92) poussant les râteliers (7, 8) lors du raccrochage du combiné (C), caractérisée en ce que les râteliers (7, 8) sont deux organes séparables, chacun d'eux étant suspendu aux extrémités de deux chapes avant et arrière ($70_v$, $70_r$ ; $80_v$, $80_r$), l'une d'elles ($70_v$, $80_v$) servant de butée de fin de course du râtelier après décrochage, et en ce que deux chapes avant ou arrière sont solidaires d'un arbre ($5_v$) monté tournant et les deux autres chapes arrière ou avant ainsi que la pédale (9) sont montées en partie tournantes sur un arbre tournant ($5_r$) et ont leurs branches traversées par un arbre tourant ($700_r$) qui est appliqué par le ressort (50) de rappel des râteliers contre ladite partie (92) de la pédale (9) poussant les râteliers (7, 8) pendant et après le raccrochage du combiné (C).

0026146

28 - Utilisation conforme à l'une des revendications 18 à 27, caractérisée en ce que le téton de verrouillage (15, 23) d'une touche sert également de mise en butée de la touche au repos.

29 - Utilisation conforme à l'une des revendications 18 à 28, caractérisée en ce que le ressort de rappel (32) de chaque cliquet de garde (30) est un ressort hélicoïdal ancré à la base (31) du bouton de garde associé (3), au niveau de la butée (301) du cliquet (30) pour garder la touche réseau associée (1).

30 - Poste téléphonique simple appel caractérisé en ce que ses moyens de connexion à la ligne téléphonique comprennent des paires de lames de contact ($424'_v$ , $424'_r$) disposées sur une plaque fixe (42') telles que définies dans l'une des revendications 2 à 4 et 6, qui coopèrent avec une pièce pivotante (426'), rappelée par ressort (4261'), permettant des connexions et des déconnexions des lames de contact telles que définies dans la revendication 2 sous la commande de la pédale (9') du combiné du poste.

31 - Poste téléphonique conforme à la revendication 30 caractérisé en ce que la pièce tournante (426') tourne, lors du décrochage, par poussée de la pédale (9') et, lors du raccrochage, par rappel de son ressort (4261').

32 - Poste téléphonique conforme à la revendication 30 ou 31, caractérisé en ce que la pièce tournante (426') est montée tournante autour d'un axe (425') servant d'application de l'une des lames de chaque paire contre la plaque fixe (42').

33 - Poste téléphonique conforme à l'une des revendications 30 à 32, caractérisé en ce que la pièce tournante (426') bute contre la plaque fixe (42') après décrochage et/ou raccrochage.

34 - Poste téléphonique conforme à l'une des revendications 30 à 33, caractérisé en ce que les lames de contact (424'), la pièce tournante (426') et la plaque fixe (42') forment un ensemble interchangeable.

C
CH
M
1
3
31
30
40
4
42
22
427
21
41

FIG.1

arrière (r)
Réseau
Privé
avant (v)

ENSEMBLE DU MECANISME DE VERROUILLAGE RESEAU et PRIVE

FIG.2

FIG.2A
VERROUILLAGE
RESEAU
PRIVE
9
90
910
740
700r
5r
70r
7
76
75
15
40
1
94
92
81r
80r
4
42
700v
71v
70v
5v
84
22
21
41
8
81v
80v
60
50

FIG.3

PRIVE
RESEAU
$2_1$
$2_2$
410
4
41
1
42
3
420
40
31
61
403
30
13
616
612
6

FIG.4
1
14
15
10
410
41
42
12
400
3
405
404
(arrière)
300
310
75
750
301
32
314
15
401
40
420
402
751
30
302
31
312
13
73
425
420m
403
313
76
74
72
303
311
(avant)
7

FIG.2B
DEVERROUILLAGE
PRIVE
RESEAU
60
84
92
94
90
9
700r
910
740
5r
70r
7
76
75
40
1
15
4
42
41
8
50
80v
5v
70v

FIG.5A
FIG.5B

FIG.5C

$1_1$ $3_1$ $1_2$ $3_2$ $31_1$ $301_1$ $750_1$ $750_2$ $75_2$ $15_1$ $75_1$ $15_2$ $30_2$ $302_1$ $302_2$ 7 $76_1$ $76_2$ $303_1$ $303_2$

FIG.5D

$1_2$ $3_1$ $1_1$ $3_2$ $15_2$ $75_1$ $32_1$ $30_1$ $751_1$ $75_2$ $30_2$ $302_1$ $15_1$ $751_2$ $302_2$ $303_1$ $303_2$ $76_2$ 7

FIG.6A
FIG.6B
FIG.6C
$3_1$
$1_1$
$310_1$
$301_1$
$15_1$
$31_1$
$32_1$
$302_1$
$30_1$
$75_1$
$303_1$
$313_1$
7
$76_1$

FIG. 7A

FIG.7B
1_1
1_2
3_1
3_2
314_1
301_1
32_1
31_1
15_1
75_1
30_1
7
303_1
76_1
700r
72
70r
740
9
910
90
5r

FIG.7C
1 1
1 2
3 1
3 2
314 1
15 1
31 1
301 1
32 1
30 1
75 1
700r
72
70r
9
7
74
303 1
740
910
76 1
5r
90

FIG.8
427
4266
4265
4264r
4265
4266
4264v
1
16r
161r
161v
10
16v
162r
162v
(arrière)
426r
4262r
4263r
4261
4260
4260
400
12
404
424r
410
421
42
40
424v
425
41
420
4262v
4263v
422
423
420m
426v
4260
4261
4260
(avant)

FIG.9
410
41
42
4245
424g
424r
421
420
4244
4243
4240
422
423
4241
4242
425
610
61
612
613
6
611

FIG.10
41
410
4
42
420
411
412
$2_1$
22
20
23
21
441
440
44
442
436v
435r
435v
437
439
434
430
431
432
433
43
$2_2$
8
84
(arrière)
840
83
82
450
452
45v
45r
455
451
453
454
(avant)

FIG.11
PRIVE
41
45v
45r
434
441
410
440
439
437
437
430
436r
42
43
436'v
436'
436v
61
435r
454
438
614
435v
616
617
615
6

FIG.12

45v
45r
440
440
434
441
441
439
450
450
452
437
430
43
436'r
436r
433
436'v
451
453
436v
438
435v
454
435r

FIG.13A

$2_1$
$2_3$
$800_v$
$23_1$
$84_3$
$84_1$
$23_3$
8
82
$5_v$
$80_v$

FIG.13B


$2_1$
$2_3$
$800_v$
$840_1$
$23_3$
$23_1$
$84_1$
$84_3$
8
$5_v$
$80_v$


FIG.13C


$2_1$
$2_3$
$800_v$
$84_1$
$23_3$
$23_1$
$84_3$
8
$5_v$
$80_v$

FIG.14A
$2_1$
$1_1$
$3_1$
$15_1$
$800_v$
$700_r$
$31_1$
$301_1$
$32_1$
$70_r$
$84_1$
$72$
$23_1$
$75_1$
$30_1$
$740$
$8$
$7$
$76_1$
$303_1$
$80_v$
$5_v$
$5_r$
$91$
FIG.14B
$2_1$
$1_1$
$3_1$
$800_v$
$700_r$
$750_1$
$31_1$
$15_1$
$75_1$
$84_1$
$30_1$
$72$
$23_1$
$70_r$
$8$
$7$
$303_1$
$76_1$
$5_v$
$5_r$

FIG.14C

FIG.15

FIG.16

426'
4266'
4264'
421'
42'
424'
4260'
425'
4241'
420'
4261'
420'm
423'
428

FIG.17A

FIG.17B

4265'
426'
4264'
90'
428
4245'
421'
424'
4261'
9'
4243'
91'
425'v
425'
4262'
42'
4240'
4241'
4242'
422'

0026146

Numero de la demande

Office européen des brevets

# RAPPORT DE RECHERCHE EUROPEENNE

EP 80 40 1349

## DOCUMENTS CONSIDERES COMME PERTINENTS

| Catégorie | Citation du document avec indication, en cas de besoin, des parties pertinentes | Revendication concernée |
|---|---|---|
| D | DE - B - 1 008 360 (AUTOPHON AKTIENGESELLSCHAFT)<br>* Colonne 3, ligne 43 - colonne 4, ligne 40; figures 1-3 *<br>-- | 1-5,29<br>31-34 |
| D | US - A - 3 518 383 (PURPURA)<br>* Colonne 2, ligne 26 - colonne 3, ligne 63; figures 5,6 *<br>-- | 1,12,<br>30 |
| D | FR - A - 2 117 111 (KRONE)<br>* Page 6, ligne 20 - page 8, ligne 16; figures *<br>-- | 1,29 |
| D | FR - A - 1 533 968 (SOCIETE DES TELEPHONES PICART LEBAS)<br>* Page 2, colonne 1, ligne 41 - page 3, colonne 1, ligne 55; figures *<br>---- | 1 |

**CLASSEMENT DE LA DEMANDE (Int. Cl. 3)**

H 04 M 1/23

**DOMAINES TECHNIQUES RECHERCHES (Int. Cl. 3)**

H 04 M 1/23
9/02
H 01 H 13/74

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23-12-1980 | KEPPENS |